(19) Europäisches Patentamt / European Patent Office / Office européen des brevets

(11) **EP 4 390 736 A1**

(12) **EUROPEAN PATENT APPLICATION**

(43) Date of publication:
**26.06.2024 Bulletin 2024/26**

(21) Application number: **23218063.8**

(22) Date of filing: **19.12.2023**

(51) International Patent Classification (IPC):
**G06F 21/56** $^{(2013.01)}$    **H04L 9/40** $^{(2022.01)}$

(52) Cooperative Patent Classification (CPC):
**G06F 21/564;** H04L 63/1416

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2022 US 202218088084**

(71) Applicant: **McAfee, LLC**
**San Jose, CA 95002 (US)**

(72) Inventors:
• **Gautam, Shashank**
**226002 Rajni Khand, Sharda Nagar,**
**Lucknow, Utta (IN)**

• **Mysore, Vinay**
**560024 Hebbal-Kempapura,**
**Karnataka, Bengaluru (IN)**
• **Pipriya, Sidharth**
**560103 Karnataka, Bengaluru (IN)**
• **Grobman, Steven**
**Flower Mound, 75022 (US)**

(74) Representative: **Maiwald GmbH**
**Engineering**
**Elisenhof**
**Elisenstrasse 3**
**80335 München (DE)**

(54) **FAIL-FAST MODEL FOR SIGNATURE VALIDATION**

(57)     A computer-implemented method of updating a malware signature data structure includes classifying an object under analysis as malicious, and computing an object signature of the object under analysis; and validating the classification, including dividing a clean object signatures data structure into a plurality of subunits; assigning the subunits to dedicated data structures; scanning the dedicated data structures, in parallel, with a plurality of scanner instances; and upon at least one scanner instance determining, above a threshold, that the object signature for the object under analysis matches the clean objects signatures data structure, rejecting the object signature for inclusion in the malware signature data structures and terminating the scanner instances.

*Fig. 1*

## Description

## Field of the Specification

This specification relates in general to computer security, and the more particularly, though not exclusively, to a system and method for providing a fail-fast model for signature validation.

## Background

Traditional malware scanning operations rely on signature matching. For example, an object under analysis on an endpoint may calculate a hash, checksum, or other signature of the object under analysis. The endpoint may then compare the signature to a database of signatures of known malware objects and, upon identifying a match, may convict the object under analysis as malware.

Brief Description of the Drawings

The present disclosure is best understood from the following detailed description when read with the accompanying FIGURES. It is emphasized that, in accordance with the standard practice in the industry, various features are not necessarily drawn to scale, and are used for illustration purposes only. Where a scale is shown, explicitly or implicitly, it provides only one illustrative example. In other embodiments, the dimensions of the various features may be arbitrarily increased or reduced for clarity of discussion. Furthermore, the various block diagrams illustrated herein disclose only one illustrative arrangement of logical elements. Those elements may be rearranged in different configurations, and elements shown in one block may, in appropriate circumstances, be moved to a different block or configuration.

FIGURE 1 is a block diagram of a malware remediation ecosystem.
FIGURE 2 illustrates an illustrative object processing pipeline.
FIGURE 3 is a flowchart of a method that illustrates sequential scanning of samples within a sample set.
FIGURE 4 is a block diagram illustration of sample partitioning.
FIGURE 5 illustrates a scanner infrastructure.
FIGURE 6 is a flowchart of a method.
FIGURE 7 is a flowchart of a method of partitioning samples.
FIGURE 8 is a flowchart of a method of performing parallel scanning.
FIGURE 9 is a graph of convergence between number of samples and accuracy of validation.
FIGURE 10 is a graph that illustrates results of a concrete test of the method of the present specification.
FIGURE 11 is a block diagram of selected elements of a security ecosystem.
FIGURE 12 is a block diagram of selected elements of a hardware platform.
FIGURE 13 is a block diagram of selected elements of a system-on-a-chip (SoC).
FIGURE 14 is a block diagram of selected elements of a network function virtualization (NFV) infrastructure.
FIGURE 15 is a block diagram of selected elements of a containerization infrastructure.
FIGURE 16 illustrates machine learning according to a "textbook" problem with real-world applications.
FIGURE 17 is a flowchart of a method that may be used to train a neural network.
FIGURE 18 is a flowchart of a method of using a neural network to classify an object.
FIGURE 19 is a block diagram illustrating selected elements of an analyzer engine.

## Summary

There is disclosed a computer-implemented method of updating a malware signature data structure, including classifying an object under analysis as malicious, and computing an object signature of the object under analysis; and validating the classification, comprising: dividing a clean object signatures data structure into a plurality of subunits; assigning the subunits to dedicated data structures; scanning the dedicated data structures, in parallel, with a plurality of scanner instances; and upon at least one scanner instance determining, above a threshold, that the object signature for the object under analysis matches the clean objects signatures data structure, rejecting the object signature for inclusion in the malware signature data structures and terminating the scanner instances.

## Embodiments of the Disclosure

The following disclosure provides many different embodiments, or examples, for implementing different features of the present disclosure. Specific examples of components and arrangements are described below to simplify the present disclosure. These are, of course, merely examples and are not intended to be limiting. Further, the present disclosure may repeat reference numerals and/or letters in the various examples. This repetition is for the purpose of simplicity and clarity and does not in itself dictate a relationship between the various embodiments and/or configurations discussed. Different embodiments may have different advantages, and no particular advantage is necessarily required of any embodiment.

## *Overview*

Modern malware detection may rely on several different techniques for identifying malware on a system.

In the particular case of an endpoint, one of these techniques is signature matching. Signature matching is one of the oldest and best understood malware detection methods. In signature matching, a security services provider provides to the endpoint a data structure that includes signatures of many known malware objects. This data structure may be referred to as a signature database, although it should be understood that any suitable form of data structure may be used. The signature database includes, in most cases, signatures for millions of known malware objects. The endpoint device may include a scanner program that periodically (or upon a stimulus) scans the endpoint device for malware. Upon encountering an unknown object, the malware scanner may compute a signature of the unknown object. The signature may be a checksum, a hash, or some other signature of the object. This signature is compared to signatures of known malware objects in the signature database. If the malware scanner identifies a match between the object under analysis and a known malware signature, then the object under analysis may be convicted as malware. The object may then be treated appropriately, such as by quarantining the object, performing further static and/or dynamic analysis of the object, exporting the object or a signature of the object to a security services provider for further analysis, subjecting the object to human analysis, or otherwise remediating the malware.

This signature matching assumes a high-quality signature database. A theoretically ideal signature database would match an object if, and only if, the object is genuinely malware. In practical cases, this signature database may be considered effective if it has a low false-negative rate and a low false-positive rate, with both being, for example, less than 5 percent. In a specific example, a signature database with a false-positive rate at 3 percent or less may be considered effective.

This signature database is not generally built on the endpoint device itself but, rather, may be built on a backend server hosted, for example, in a public cloud infrastructure or on a mainframe. The present specification will use a public cloud infrastructure as an illustrative embodiment, although the teachings of the present specification should be understood to also apply to a dedicated data center or a mainframe. In an example, the security services provider contracts with a large number of enterprises, each with a large number of endpoints. As these endpoints encounter unknown objects, they may perform static and/or dynamic analysis on the objects to characterize them as malicious or safe. Alternatively, the endpoints may export the objects or information about the objects, such as metadata, signatures, or other metadata, to the security services provider. The security services provider may provide more comprehensive static, dynamic, and/or human analysis of objects to determine which objects represent malware versus which ones are safe or clean.

To further ensure accuracy of the signature database, additional verification may be provided after the object has been initially characterized. For example, human or machine learning may be used to initially characterize an object as malicious or clean, and a signature may be computed for the object. As an additional verification step, the signature for the object under analysis may be compared to a database of known clean objects. If the object under analysis has a signature match to a known clean object, this may represent a high probability that the object under analysis is also clean and was falsely identified as malware. However, this analysis need not be one-to-one comparison. In the case of a checksum or hash, an exact match to an object in the clean signatures/features database may indicate with high confidence that the object is clean. In other cases, machine learning algorithms may be used to calculate similarity based on feature vectors. In that case, an exact match to the feature vectors is not always necessary to indicate a match but, rather, a match may be triggered on a probability of match above a threshold, such as 0.7 (e.g., 70 percent similarity). Furthermore, if feature vector matches for a plurality of objects in the clean signature database occur, this may further increase the probability of a match indicating that the object was falsely classified as malicious. For example, if the object matches greater than objects with greater than P probability, the object may exceed the threshold and be deemed clean. In that case, the object is not added to the malware signature list and may instead be added to the clean signature list. The object may also be flagged for further analysis or scrutiny based on the match to known clean objects above a threshold.

Existing systems and methods may provide signature matching to a database of known clean objects. For example, McAfee, Inc. has a database of hundreds of millions of known clean object signatures and/or features accumulated over a span of many years. A highly reliable method of matching an object under analysis to the database is to sequentially compare a signature, such as a checksum or hash of the object, to each signature or checksum of the known clean objects. In this case, even a single exact match of the signature or checksum may provide high confidence that the object is clean and should be rejected from the malware signature database. However, this approach may also have disadvantages. Because the database of signatures of known clean objects is very large, sequentially comparing a signature of the object under analysis to the entire database may be computationally expensive. The present specification provides, for example, probabilistic approaches to downsample the database of known clean signatures or features to provide a reduced set of signatures for comparison. In operational tests, these probabilistic approaches reduce the search space by approximately 60 to 90 percent while maintaining approximately 97 percent integrity in the ensuing results. Thus, using the probabilistic method described herein, the system can search a much smaller space of signatures while still maintaining a false-positive rate below 3 percent.

Additional improvements are provided with respect to the search method. For example, because the search functions and data structures can be provided in a public cloud infrastructure or other infrastructure that provides data virtualization and guest operations, multiple instances of a scanner can be implemented in parallel. In a particular example, using public cloud infrastructure, the signature list may optionally be downsampled using one of the probabilistic techniques illustrated herein. This downsampling provides a reduced set of signatures for the search space. The reduced set may further be sorted into categories, such as file types. This sorting may be useful because different file types may have different resource needs. For example, a match to an executable file (such as a Windows EXE or MSI file) may take on the order of half a second. In contrast, a text file, such as an HTML or JavaScript file may take on the order of a tenth of a second. Thus, multiple text files can be checked in the time it takes to check a single executable file. Thus, the signatures are sorted into file types, and then virtual storage space may be allocated to the different file types. For example, the system may allocate a virtual disk and may initially allocate a plurality of partitions (such as three or four partitions) to hold different file types. One partition may be dedicated to executable file. One partition may be dedicated to EXE files, a second partition may be dedicated to MSI files, a third partition may be dedicated to HTML files, and a fourth partition may be dedicated to JavaScript files. In operation, a maximum data size may be assigned to a partition and to a virtual disk. If the number of objects in the data structure exceeds the size, then another partition or virtual disk may be allocated to handle the additional data. For example, an embodiment may provide a maximum number of object signatures or a maximum disk size (such as 50 gigabytes) for a particular search space. In the foregoing example, if the partition for EXE files is "full" (i.e., the partition has exceeded its maximum permissible size according to the method), then another partition may be allocated for EXE files. In this case, if a disk has a maximum of four partitions, then an additional virtual disk may be allocated, and an additional partition may be allocated on the virtual disk. Because the other partitions are not full, three empty partitions may be allocated on the virtual disk ready to hold additional file types as necessary. The system may then begin populating the new partition on the new virtual disk to additional EXE signatures. If the system later encounters dynamic link library (DLL) files and other file types, such as Java files, command scripts (CMD), and power shell scripts (PS), then additional virtual disks and/or partitions may be allocated to these as necessary.

Within the virtualization infrastructure, several instances of this scanner block may be spun up to operate in parallel. In an illustrative embodiment, one instance of scanner is allocated per virtual disk partition. By assigning dedicated partitions to each scanner, the system may mitigate data collisions or instances where one scanner needs to finish a read operation before another scanner can fetch its data. In parallel, each scanner fetches data from its dedicated partition. It then performs the signature scans, which may be deterministic (as in the case of a hash or a checksum) or probabilistic (as in the case of a feature vector). With each comparison, the individual scanner may determine whether the object under analysis matches the clean file signature above a threshold. External to the scanners, a count may be maintained to indicate the cumulative total of signature matches encountered by the various scanners. If the counter exceeds a threshold number, then the object is deemed clean and is not added to the malware signature database. Once the threshold has exceeded, a fast-fail condition is invoked. Because the object has exceeded the threshold and is deemed clean, there is no need to continue searching the rest of the downsampled signature space. Rather, once the condition is met, all the scanners may be terminated, and resources may be reallocated to other tasks, including scanning the next object under analysis.

### Selected Examples

The foregoing can be used to build or embody several example implementations, according to the teachings of the present specification. Some example implementations are included here as nonlimiting illustrations of these teachings.

Example 1 is a computer-implemented method of updating a malware signature data structure, comprising: classifying an object under analysis as malicious, and computing an object signature of the object under analysis; and validating the classification, comprising: dividing a clean object signatures data structure into a plurality of subunits; assigning the subunits to dedicated data structures; scanning the dedicated data structures, in parallel, with a plurality of scanner instances; and upon at least one scanner instance determining, above a threshold, that the object signature for the object under analysis matches the clean objects signatures data structure, rejecting the object signature for inclusion in the malware signature data structures and terminating the scanner instances.

Example 2 is a method of example 1, wherein validating the classification further comprises down sampling the clean object signatures data structure.

Example 3 is a method of example 2, wherein down sampling yields a reduced clean object signature database with at least a 50% reduced size.

Example 4 is a method of example 2, wherein down sampling the clean object signatures data structure comprises excluding signatures for samples last encountered past a time threshold.

Example 5 is a method of example 4, wherein the time threshold is six months.

Example 6 is a method of example 2, wherein down sampling the clean object signatures data structure comprises excluding signatures for samples that have not produced a hit for a number of validation cycles above a threshold.

Example 7 is a method of example 2, wherein down sampling the clean object signatures data structure comprises including only samples that have produced a hit within a past number of N cycles, wherein N is a positive integer.

Example 8 is a method of example 1, further comprising allocating one dedicated scanner instance per dedicated data structure.

Example 9 is a method of example 1, wherein the scanner instances are virtual machines.

Example 10 is a method of example 1, wherein the scanner instances are containers.

Example 11 is a method of example 1, wherein the dedicated data structures comprise hard drive partitions

Example 12 is a method of example 1, wherein the dedicated data structures comprise virtual storage disks.

Example 13 is a method of example 1, wherein dividing the clean objects signatures data structure comprises dividing by object type or file type.

Example 14 is an apparatus comprising means for performing the computer-implemented method of any of examples 1 - 13.

Example 15 is the apparatus of example 14, wherein the means for performing the computer-implemented method comprise a processor and a memory.

Example 16 is the apparatus of example 15, wherein the memory comprises machine-readable instructions that, when executed, cause the apparatus to perform the computer-implemented method of any of examples 1 - 13.

Example 17 is the apparatus of any of examples 14 - 16, wherein the apparatus is a computing system.

Example 18 is at least one computer-readable medium comprising instructions that, when executed, implement a computer-implemented method or realize an apparatus as in examples 1 - 17.

Example 19 is one or more tangible, nontransitory computer-readable media having stored thereon executable instructions to instruct a processor circuit to: receive, for an object under analysis classified as malicious, a signature for the object under analysis; assign subdivisions of a clean object signatures database to a plurality of dedicated data storage structures for the subdivisions; cause a plurality of scanner instances to scan the dedicated data storage structures in parallel; upon at least one scanner instance determining, above a threshold, that the signature for the object under analysis matches the clean object signatures database, reject the signature of the object under analysis for inclusion in a malware signatures database for endpoint devices, and terminate the scanner instances.

Example 20 is the one or more tangible, nontransitory computer-readable media of example 19, wherein the instructions are further to down sample the clean object signatures database.

Example 21 is the one or more tangible, nontransitory computer-readable media of example 20, wherein down sampling yields a reduced clean object signature database with at least a 50% reduced size.

Example 22 is the one or more tangible, nontransitory computer-readable media of example 20, wherein down sampling the clean object signatures database comprises excluding signatures for samples last encountered past a time threshold.

Example 23 is the one or more tangible, nontransitory computer-readable media of example 22, wherein the time threshold is six months.

Example 24 is the one or more tangible, nontransitory computer-readable media of example 20, wherein down sampling the clean object signatures database comprises excluding signatures for samples that have not produced a hit for a number of validation cycles above a threshold.

Example 25 is the one or more tangible, nontransitory computer-readable media of example 20, wherein down sampling the clean object signatures database comprises including only samples that have produced a hit within a past number of N cycles, wherein N is a positive integer.

Example 26 is the one or more tangible, nontransitory computer-readable media of example 19, wherein the executable instructions are further to allocate one dedicated scanner instance per dedicated data structure.

Example 27 is the one or more tangible, nontransitory computer-readable media of example 19, wherein the scanner instances are virtual machines.

Example 28 is the one or more tangible, nontransitory computer-readable media of example 19, wherein the scanner instances are containers.

Example 29 is the one or more tangible, nontransitory computer-readable media of example 19, wherein the dedicated data storage structures comprise hard drive partitions

Example 30 is the one or more tangible, nontransitory computer-readable media of example 19, wherein the dedicated data storage structures comprise virtual had drives.

Example 31 is the one or more tangible, nontransitory computer-readable media of example 19, wherein dividing the clean object signatures database comprises dividing by object type or file type.

Example 32 is a computing system, comprising: a hardware platform comprising at least one processor circuit and at least one memory; a guest infrastructure; and instructions encoded within the at least one memory to instruct the at least one processor circuit to: allocate, within the guest infrastructure, a plurality of scanner instances configured to compare object signatures; receive, for an object under analysis classified as malicious, a signature for the object under analysis; assign subdivisions of a clean object signatures database to a plurality of dedicated data storage structures for the subdivisions; cause the plurality of scanner instances to scan the dedicated data storage structures in parallel; and upon at least one scanner instance determining, above a threshold, that the signature for the object under analysis matches the clean object signatures database, reject the signature of the object under analysis for inclusion in a malware signatures database for endpoint devices, and terminate the scanner instances.

Example 33 is the computing system of example 32, wherein the guest infrastructure comprises a containerization infrastructure.

Example 34 is the computing system of example 32, wherein the guest infrastructure comprises a virtualization infrastructure.

Example 35 is the computing system of example 32, wherein the guest infrastructure comprises a microservices infrastructure.

Example 36 is the computing system of example 32, wherein the instructions are further to down sample the clean object signatures database.

Example 37 is the computing system of example 36, wherein down sampling yields a reduced clean object signature database with at least a 50% reduced size.

Example 38 is the computing system of example 36, wherein down sampling the clean object signatures database comprises excluding signatures for samples last encountered past a time threshold.

Example 39 is the computing system of example 38, wherein the time threshold is six months.

Example 40 is the computing system of example 36, wherein down sampling the clean object signatures database comprises excluding signatures for samples that have not produced a hit for a number of validation cycles above a threshold.

Example 41 is the computing system of example 36, wherein down sampling the clean object signatures database comprises including only samples that have produced a hit within a past number of N cycles, wherein N is a positive integer.

Example 42 is the computing system of example 32, wherein the instructions are further to allocate one dedicated scanner instance per dedicated data structure.

Example 43 is the computing system of example 32, wherein the dedicated data storage structures comprise hard drive partitions

Example 44 is the computing system of example 32, wherein the dedicated data storage structures comprise virtual had drives.

Example 45 is the computing system of example 32, wherein dividing the clean object signatures database comprises dividing by object type or file type.

*Detailed Description of the Drawings*

A system and method for a fast-fail model for signature validation will now be described with more particular reference to the attached FIGURES. It should be noted that throughout the FIGURES, certain reference numerals may be repeated to indicate that a particular device or block is referenced multiple times across several FIGURES. In other cases, similar elements may be given new numbers in different FIGURES. Neither of these practices is intended to require a particular relationship between the various embodiments disclosed. In certain examples, a genus or class of elements may be referred to by a reference numeral ("widget 10"), while individual species or examples of the element may be referred to by a hyphenated numeral ("first specific widget 10-1" and "second specific widget 10-2").

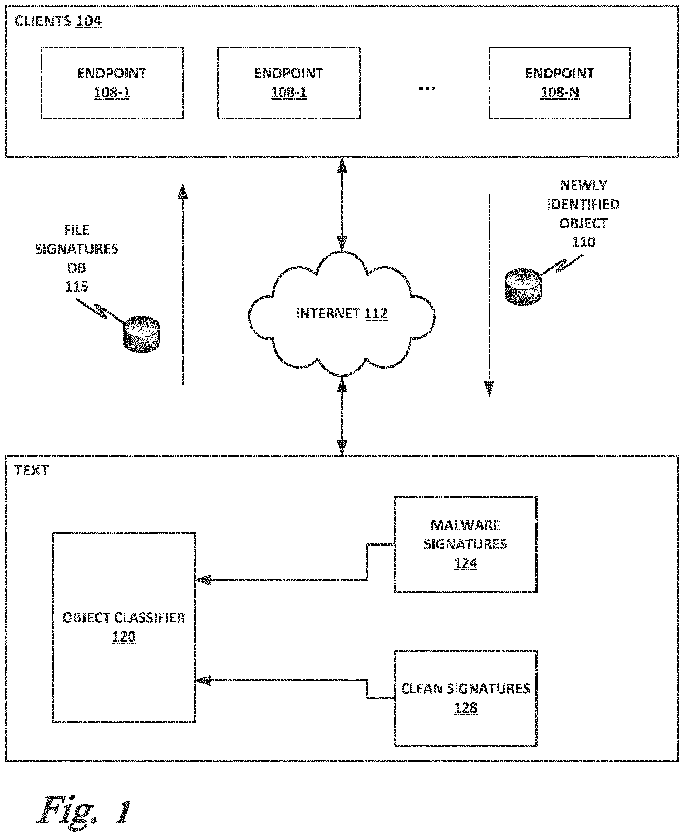

**FIGURE 1** is a block diagram of a malware remediation ecosystem 100. Malware remediation ecosystem 100 includes one or more clients 104 that communicatively couple to a security services provider (SSP) cloud 116 via an internet 112. Clients 104 operate a number of endpoints, such as endpoint 108-1, endpoint 108-2 through endpoint 108-3. Each of these endpoints may maintain a security agent that is used to detect and remediate malware objects that may infect the endpoints or their respective enterprises. When endpoints 108 identify unknown objects, they may export a newly identified object 110 to SSP cloud 116. Alternatively, endpoints 108 may export metadata about object 112. SSP cloud 116 may use an object classifier 120 to classify the newly identified object 110 and determine whether it should be added to a malware signatures database. The malware signatures database maintains signatures of a large number of known malware objects, which can be synchronized with data structures on endpoints 108. The security agents on endpoints 108 may compare newly encountered objects to the malware signature database to determine if an object is malware.

Object classifier 120 may have access to various databases, such as malware signatures 124 and clean object signatures 128. Clean object signatures database 128 may include signatures and/or features usable by an machine learning (ML) model for a large number of known clean objects. Object classifier 120 may analyze newly identified object 110, such as by performing an initial classification, which may be a human classification, machine classification, such as using an ML model, or a combination of both. After object classifier 120 has performed the initial classification, it may also provide a validation phase, which provides additional surety regarding the classification of the object. In an example, a validation phase may include, individually or as part of a suite of validations, a clean signature check. In this case, a signature for the newly IDed object is compared to signatures of known clean objects within the clean object signatures database 128. Clean object signatures database 128 may be a database that includes signatures for a large number of clean objects, such as tens or hundreds of millions of objects, that have been collected over a long time, such as over a period of years. The signatures may be, for example, a checksum, a hash, or a feature vector built from the object. Various other signatures may also be used. If a signature for the object under analysis matches the clean signature database 128 within a threshold, then the newly identified object may be rejected from the malware file signature data structure 115, which may be used to update or synchronize to data structures on the endpoints. Notably, even if the object under analysis was originally classified as malware by object classifier 120, if the check against clean signatures database 128 fails (meaning that it matches within a threshold), the object under analysis is deemed not malware and is rejected from file signatures database 115. The threshold in this case may indicate an exact match to one or more objects in clean signatures database 128. For example, if checksums or hashes are used, an exact match indicates with high confidence that the object under analysis is the same as the object that provided the signature in the clean signatures database 128. In this case, a single exact match may be sufficient. In other cases, other signature types may be used. For example, if the object is featurized, then feature vectors may be compared to provide a similarity scale between the object and the known clean objects. If the feature vector comparison (which may use, for example, a clustering algorithm) indicates similarity above a threshold, such as 0.7 or a different threshold, then similarity may be detected. If the object under analysis shows sufficient similarity to a sufficient number of objects, then the object under analysis may be deemed clean and may be rejected from file signature database 115.

Comparing the object under analysis to clean signatures database 128 may use, in some cases, a brute force approach of signature validation and release. In that case, object classifier 120 may check the signature of the object under analysis against a large corpus of known malware free samples and validate that the signatures do not match on a threshold of samples from the clean corpus. However, this approach requires high overhead to scan each signature against each sample and collect the results. The brute force approach may result in high computational time, high cost, and increased release time before the file or object under analysis can be correctly classified. Furthermore, absent lifecycle rules on samples in the clean signatures database 128, handling of this ever-increasing dataset can become challenging.

To mitigate some of these limitations, the present specification provides a system and method that utilizes a clustering algorithm on the clean corpus with historic driver or object false data as a feature to identify samples that have a high probability of failing on a driver or sample. In an example, a method includes building a defined set of clean samples as a dataset, which can be updated at regular intervals such that higher priority is assigned to samples that are prevalent and that have seen high failures on drivers or objects under analysis historically. This provides an ML-based fail-fast approach to remove redundant samples based on similarity and prevalence from the dataset to expedite driver validation based on historic falsing data. Note that, in this case, a "false" result means a match to the clean signatures database 128, which indicates that the object under analysis 110 is, in fact, clean even though it was classified as malware.

The ML-based fail-fast approach includes building a sample filtering and selection criterion based on how likely a sample is to be a false fit on a signature rather than scanning through the entire corpus, which may include tens of millions of samples, such as 50 million samples. In this approach, the method may define a filtering criterion on the clean samples dataset based on prevalence and its impact on the efficacy of a signature validation. With the filtering criteria in place, the system may reduce the original malware free sample corpus from a large value of tens or hundreds of millions of samples down to a much smaller dataset, such as millions or tens of millions of samples. In one illustrative example, a set of 250 million samples can be downsampled to approximately 50 million samples for the final comparison.

In further examples, collaborative filtering and efficient ML-based clustering algorithms may be used to build a sample selection criterion from these clusters based on how likely a sample is to give a false hit on a signature. The resultant reduced dataset, in an example, is as small as 2 million samples. This can be built using the above sample selection criterion. During scanning, the method attempts to fail fast by checking if a threshold percentage of false hits on a signature is reached and prioritizing the chunk on which it failed to a higher rank in the clustering algorithm.

The method for sample filtering may use collaborative filtering to further scan only the relevant samples first for the validation cycle of the signature. This helps to reduce the compute resources and expedites processing for releasing the signature to the market.

By way of illustration, the signature validation method disclosed herein may be divided into three different stages. In each stage, the results may be further analyzed by using different approaches to enhance the signature validation. The first phase may include downsampling or building a more optimized set of malware free samples. The second phase may include scanning new detection signatures against the optimized set built in phase 1. Finally, the third phase may include discarding false prone signatures based on results from phase 2.

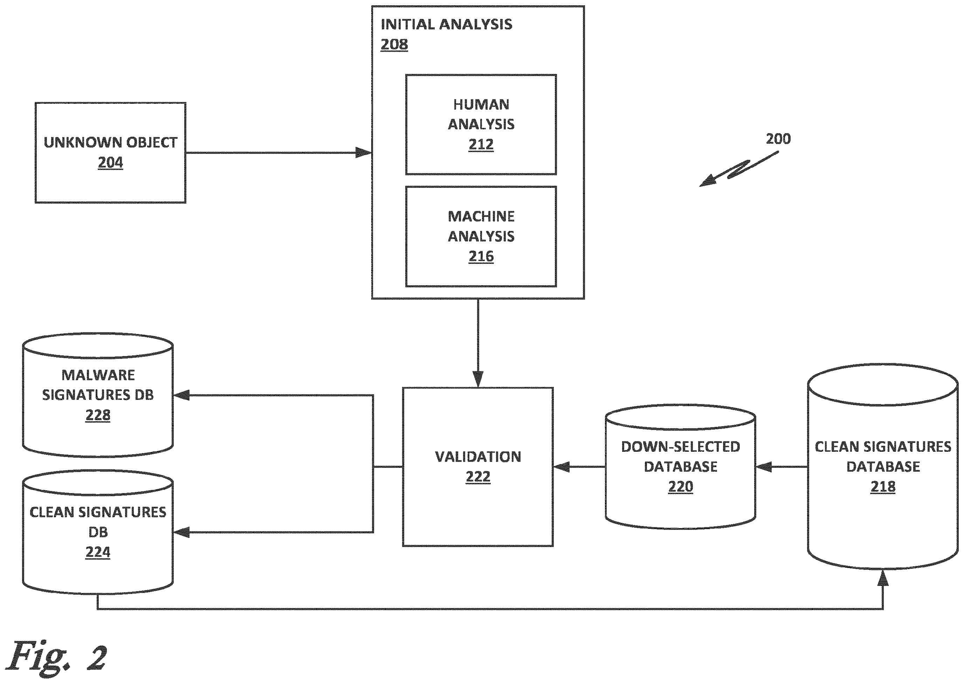

FIGURE 2 illustrates an illustrative object processing pipeline 200. Object processing pipeline 200 starts with an unknown object 204. Unknown object 204 may then be subjected to initial analysis 208. In various examples, initial analysis 208 may include both human analysis 212 and machine analysis 216. Furthermore, these may be combined or augmented to one another.

After unknown object 204 has been initially classified, it receives validation 222. Validation 222 may rely on a clean signature database 218, which may be downsampled as in 220. This provides a downsampled set of signatures to use for validation according to the methods used herein, such as an ML clustering algorithm or similar. After validation, unknown object 204 may be assigned to a clean signature database 224 or to a malware signature database 228. Other clustering results are also possible, such as an unknown reputation, a desire for further analysis, or similar. As described above, downsample 220 may include a three-phase process. Phase 1 may include building an optimized set of malware free samples. Several approaches are possible for this, which may be used discretely or in combination with one another. A first approach is removing samples from the dataset after the sample last seen date exceeds a time, such as a number of months. Because the dataset consists of various samples against which signature validations have been made over a number of years, there may be many samples that are not used in modern computing systems. These samples may include old operating system (OS) files, Java files, obsolete drivers, obsolete kernel modules, system libraries, or similar. To remove these samples, it may be of sufficient to remove samples that were last seen beyond a specific time. In one example, samples are discarded if they have not been seen in a result within the past six months. This approach can drastically reduce the sample set, leaving only relevant samples with respect to current or recent signatures for validation.

A second approach includes removing samples from the dataset if they have not produced a false hit for over N validation cycles. In this case, the trigger is not on time but on the number of validations that have occurred. The dataset consists of only clean samples, many of which have never produced a false hit for various signatures. For example, many signatures completely ignore system files and trusted source files and libraries. Thus, these sets of files do not contribute significantly to the signature validation set. These files may contribute to keeping a logged set of known clean files but are less useful for scanning against unknown files and thus can represent large overhead in terms of resource usage. Because the impact of these files is much lower than for files that are hit frequently, they may be eliminated from the scan. In an illustrative example, the dataset may consist of a proximally 10 percent of these kinds of files. Thus, removing these kinds of files may reduce the daily dataset by approximately 10 percent.

A third approach is to keep only samples against which signatures have had a false hit in the past N runs. This represents a brute force approach of keeping relevant samples and is quite straightforward. The concept is to keep samples against which signatures have falsed and to discard the rest. This approach may be used sparingly and judiciously as, if it is misused, it may result in skewed results. This approach can reduce the dataset to a small number but, in some cases, can also yield results of signatures that are not related to each other at every release. This can lead to many future invalid signatures that pass the validation test because the smaller step might not contain a single sample in which it can be false.

In an example, a method may be used to increase efficacy and resource optimization to ensure that each signature validation is now using the most prevalent samples but also samples that are likely to false over a particular signature. To achieve this, the method may employ a hybrid of approaches, one and two listed above, with a concept of collaborative filtering.

In this method, collaborative filtering may be used to partition together the samples that fail on similar kinds of signatures depending on file type, file size, vendor, and prevalence samples, by way of illustrative and nonlimiting example. This creates a small subset of files that have the highest prevalence with respect to the most failures (as illustrated in approach 3). Depending on the samples against which a signature has failed, the method may use a user-based collaborative filtering, which can recommend using samples with the most similarity to previously falsed samples. This leads to both a small partition of clean samples and also a higher efficacy compared to using only the smallest partition (as in approach 3 above).

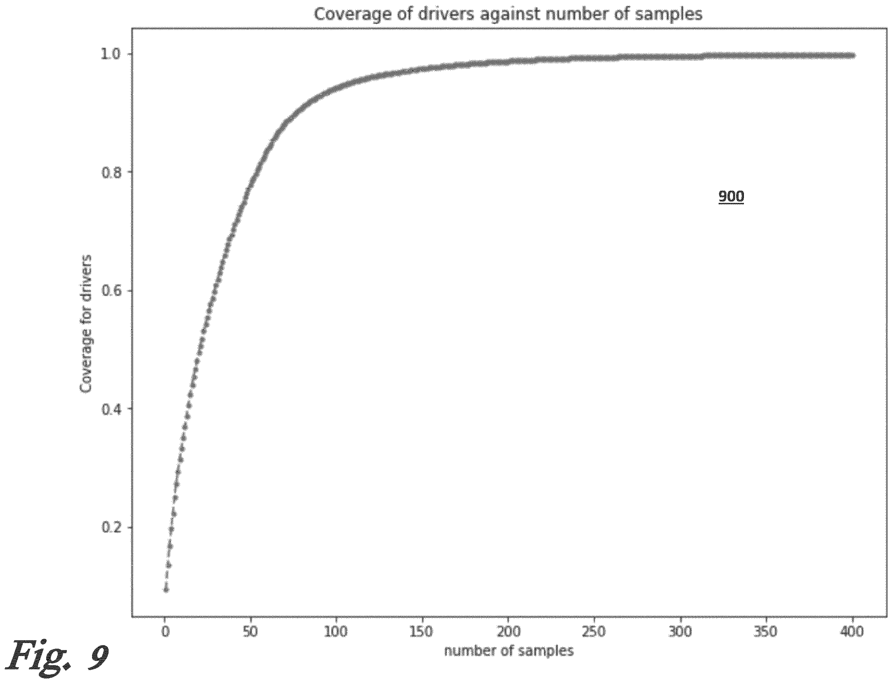

Experimentally, using the hybrid of approach 2 and approach 3 generates a subset of samples that cover failure scenarios for more than 99 percent of signatures with as few as 300 clean samples over a period of a month. Graph 900 of **FIGURE 9** illustrates the coverage for drivers or samples under analysis versus the number of samples from the clean dataset. As can be seen in graph 900, coverage follows a roughly logarithmic pattern and thus, with 300 or 400 samples, the marginal utility of adding more clean samples to the dataset decreases.

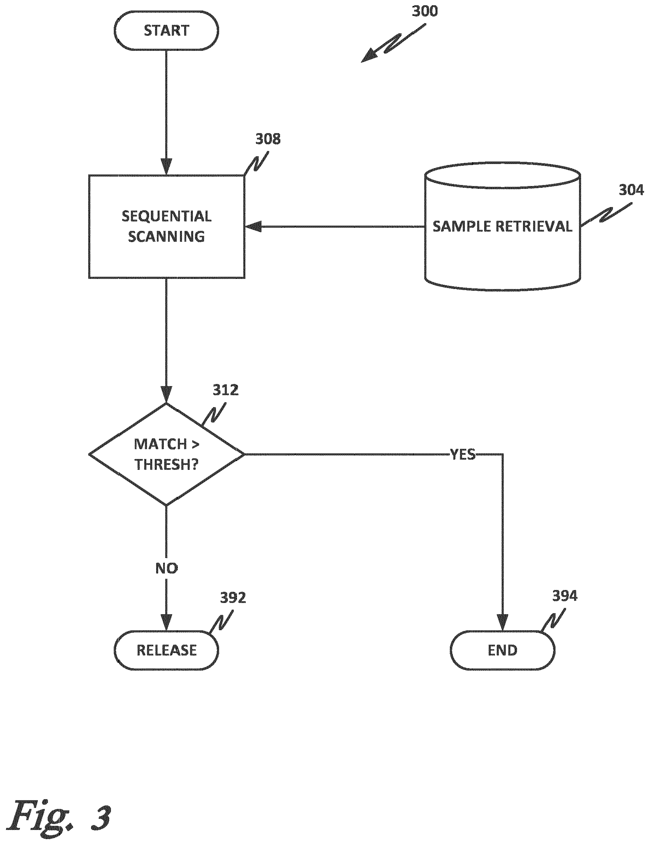

**FIGURE 3** is a flowchart of a method 300 that illustrates sequential scanning of samples within a sample set. Sequential scanning is a serial operation in which the signature of the object under analysis is compared to a signature for a known clean sample from the set one after the other. Thus, each sample is individually scanned and, after the scan of each sample, the system evaluates the number of false hits and chooses to discard or release the signature. This is a very straightforward way to proceed but has limitations because the time taken to scan some samples against the signature can vary greatly and thus can impact completion time. Regarding resource utilization, once the system reaches a threshold, it may not stop the processing as the total number of failures are calculated at the end of the process. Thus, even if a signature is falsed early on in the processing, compute resources may be wasted continuing to evaluate the sample.

In this illustration, sequential scanning starts in block 308 with sample retrieval from a database 304.

Block 308 represents a full sequential scanning regimen in which the sample under analysis is compared to all signatures of known clean samples from database 304. Only after all samples have been analyzed does control pass to decision block 312. In decision block 312, the system determines whether the scan met the threshold. If the scan did meet the threshold, then the signature or the sample is false (meaning that it is too similar to known clean samples to be triggered as malware), and the sample is discarded in block 394.

Alternatively, if the sample under analysis was not similar enough to known malware within the threshold, then, in block 392, the sample may be released for inclusion in the malware signature database.

Embodiments may improve on performance by performing parallel scanning. In parallel scanning, the method employs distributive scanning of the samples so that multiple scans can be run at the same time. The method may also further segregate the samples based on their prevalence ordering (failure rate), average scan time, size, and/or file type. This can help to keep the sample subsets in such a way that can bound signature validation within specific constraints of file type, completion time, and priority of a signature scan.

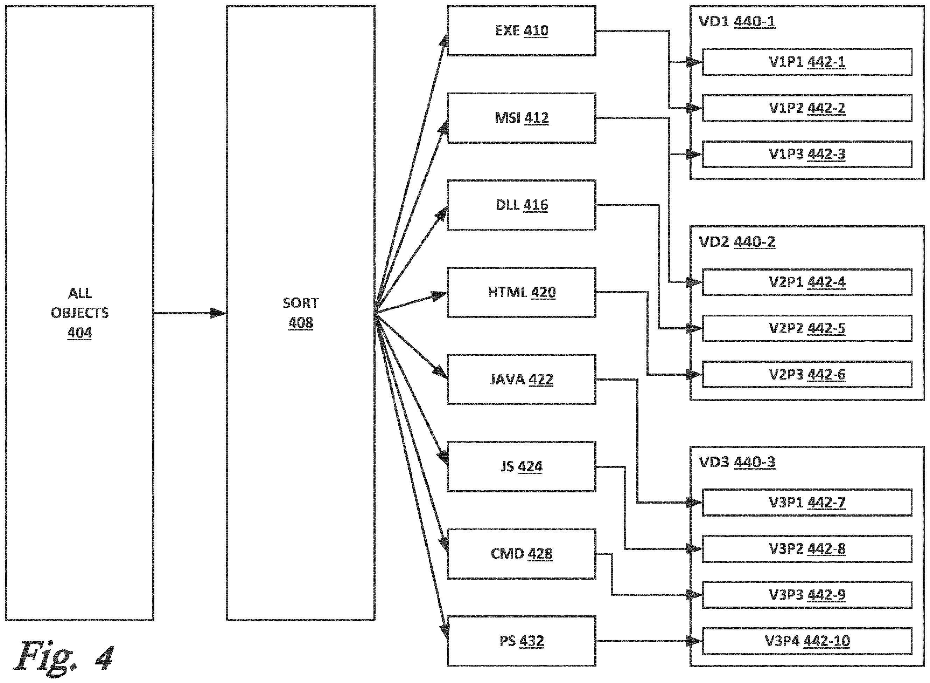

FIGURE 4 is a block diagram illustration of sample partitioning. Note that samples may be partitioned only after they have been downsampled in embodiments where downsampling is used. In an illustration, partitions may be sampled based on file or object type. The partitioned objects may then be assigned to dedicated data structures, such as dedicated partitions on virtual disks.

In this illustration, a database of all objects 404 is sorted in block 408. This sorting may divide the objects into groups according to, for example, file type. In this illustration, eight file types are identified. Executable (EXE) or.exe files 410,.msi (MSI) files 412,.dll (DLL) files 416,.html (HTML) files 420,.java (JAVA) files 422, JavaScript (JS) or.js files 424, command scripts (CMD) or.cmd files 428, and power shell scripts (PS) or.ps files 432. In this example, three virtual disks have been provisioned within a cloud infrastructure. These are VD1 440-1, VD2 440-2, and VD3 440-3. These virtual disks have been partitioned into a number of partitions 442. The number of partitions may be identical across various disks or may vary by disk. In this case, partitions V1P1 442-1, V1P2 442-2, and V1P3 442-3 are provisioned on VD1 440-1. V2P1 442-4, V2P2 442-5, V2P3 442-6 are provisioned on VD2 440-2. Partitions V3P1 442-7, V3P2 442-8, V3P3 442-9, and V3P4, 442-10 are provisioned on VD3 440-3.

To avoid data collisions, different subunits or substructures of the sorted files are provisioned to different partitions. This can take advantage of differences in processing and resource time. For example, processing an EXE or MSI signature may take on the order of 500 milliseconds while processing an HTML or JS file may take on the order of tens to 100 milliseconds. Thus, it may introduce inefficiencies for a scanner operating on HTML files to have to wait for data reads from an EXE data structure.

In this example, EXE files 410 are provisioned strictly to partitions V1P1 442-1 and V1P2 442-2. MSI files 412 are provisioned strictly to partitions V1P3 442-3 and V2P1 442-4. Dynamic link libraries 416 are provisioned strictly to partition V2P2 442-5. HTML files 420 are provisioned strictly to partition V2P3 442-6.

JAVA files 422 are provisioned strictly to partition V3P1 442-7. JS files 424 are provisioned strictly to partition V3P2 442-8. CMD files 428 are provisioned strictly to partition V3P3 442-9. PS files 432 are provisioned strictly to partition V3P4 442-10.

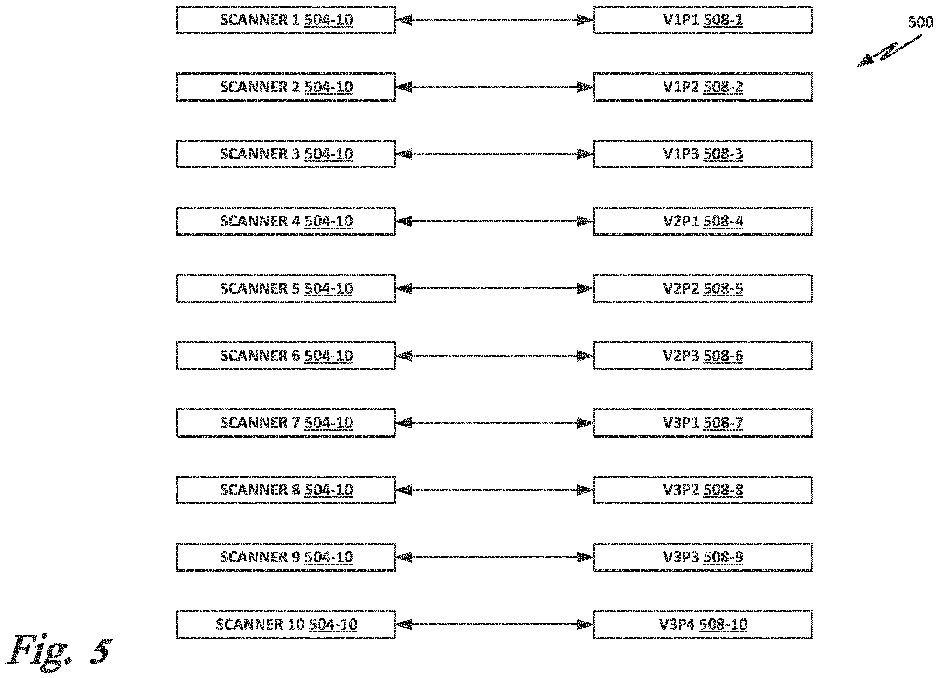

FIGURE 5 illustrates a scanner infrastructure 500. With different types of data structures provisioned to their own dedicated file system partitions, it may be advantageous to allocate scanner instances to work on each partition. This ensures the different scanner instances do not have to wait on data operations from other scanner instances and that they can operate independently. In some cases, the validation function may be realized on a public cloud infrastructure. In that case, it may be straightforward to implement scanners as guest systems, such as virtual machines or containers. In this case, 10 scanners are allocated, namely, scanner 1 504-1, scanner 2 504-2, scanner 3 504-3, scanner 4 504-4, scanner 5 504-5, scanner 6 504-6, scanner 7 504-7, scanner 8 504-8, scanner 9 504-9, and scanner 10504-10. Each scanner may be assigned to its own dedicated partition 508 on which it may operate. Each partition may have a limit, such as a data size limit (e.g., 50 gigabytes) or a number of objects limit. If too many objects are assigned to a partition, then a new partition may be allocated and a new scanner instance may be spun up to handle that partition.

In this example, scanner 1 504-1 is assigned to partition V1P1 508-1. Scanner 2 504-2 is assigned to partition V1P2 508-2. Scanner 3 504-3 is assigned to partition V1P3 508-3. Scanner 4 504-4 is assigned to partition V2P1 508-4. Scanner 5 504-5 is assigned to scanner V2P2 508-5. Scanner 6 504-6 is assigned to partition V2P3 508-6. Scanner 7 504-7 is assigned to partition V3P1 508-7. Scanner 8 504-8 is assigned to partition V3P2 508-8. Scanner 9 504-9 is assigned to partition V3P3 508-9. Scanner 10 504-10 is assigned to partition V3P4 508-10.

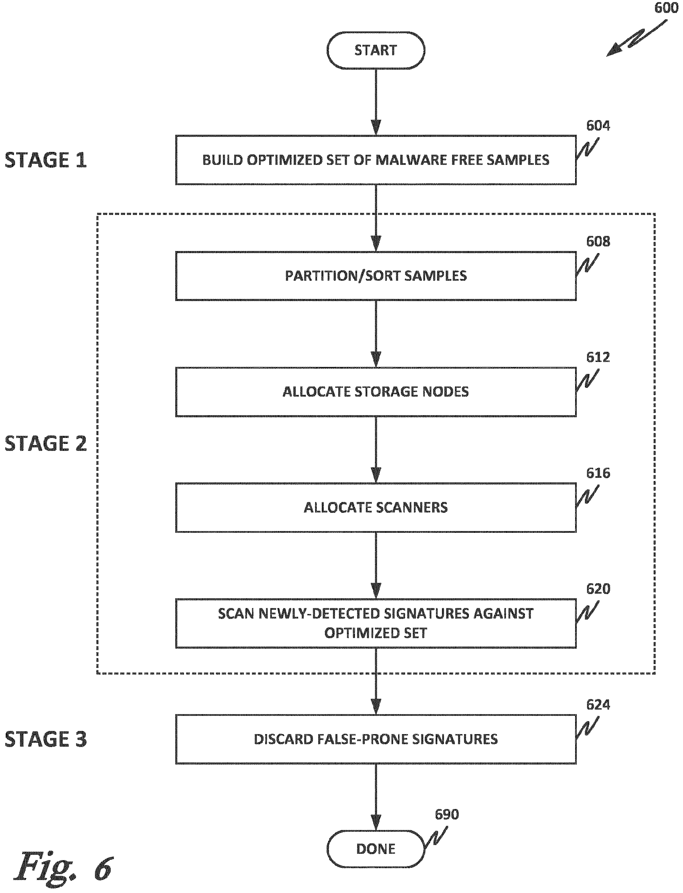

FIGURE 6 is a flowchart of a method 600. Method 600 illustrates a three-stage validation procedure for newly identified object signatures. This three-stage procedure is provided by way of illustration. Embodiments of the teachings herein may include all three stages or only some of the stages. Furthermore, not all operations illustrated within each stage are mandatory, and embodiments may include other stages or procedures than those illustrated here.

Block 604 illustrates stage 1. In stage 1 of the procedure, the system builds an optimized set of malware free samples. As discussed above, building this sample set may include downsampling from a larger database that includes all of the available malware free sample signatures. Downsampling can include selecting out older signatures, selecting out lesser used signatures, or similar.

Stage 2 illustrates a scanning stage. In this example, stage 2 comprises blocks 608, 612, 616, and 620.

In block 608, the system may partition or sort the samples. Samples may be sorted on any suitable criterion or boundary. By way of illustration, samples may be sorted according to sample type or file type, sample size, or based on a clustering algorithm, such as an artificial intelligence (AI) clustering algorithm.

In block 612, the system may allocate storage nodes to the sample partitions. For example, separate storage nodes, such as separate partitions on virtual disks, may be allocated to each partition, such as each file type. If the number of samples is too large for the designated storage space for a partition, or if there are too many samples in a partition, a new partition may be allocated for that sample type. For example, if there are a large number of executable files, more than one partition may be allocated for executable files.

In block 616, the system allocates scanners, such as by spinning up instances of containers or virtual machines. In an illustrative embodiment, one scanner is allocated per each storage node, such as each partition. This allows the scanners to operate independently and in parallel to scan the objects within a particular storage node.

In block 620, newly detected signatures may be scanned against the downsampled or optimized set of malware free sample signatures. In appropriate embodiments, this scanning may be performed in series or in parallel.

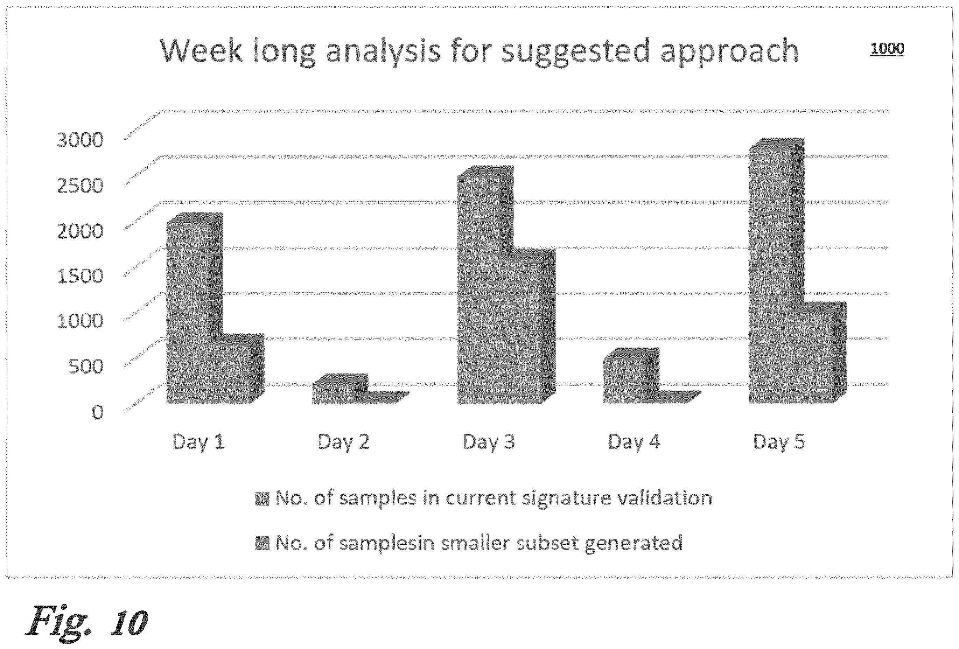

Stage 3 comprises block 624. In block 624, the system may determine whether any false positive matches were detected in the prior stage. If no false positives were matched, then the scan may be complete, and the updated malware signatures may be exported to the client or clients. However, in the case where some false positives were detected (i.e., where clean signatures were matched above a threshold), additional assurance may be required in the form of a re-scan. In this case, the object or objects under analysis may be scanned against a reduced set of signatures, wherein a large number of signatures that are prone to provide false matches are discarded. Statistically, these signatures are unlikely to be a genuine match, and thus, may provide noise in the results. Thus, in block 624, the system may discard false prone signatures as discussed below in connection with FIGURE 10. Discarding false prone signatures can help to increase accuracy, reduce the number of false positives, and increase efficiency of the system.

In block 690, the method is done.

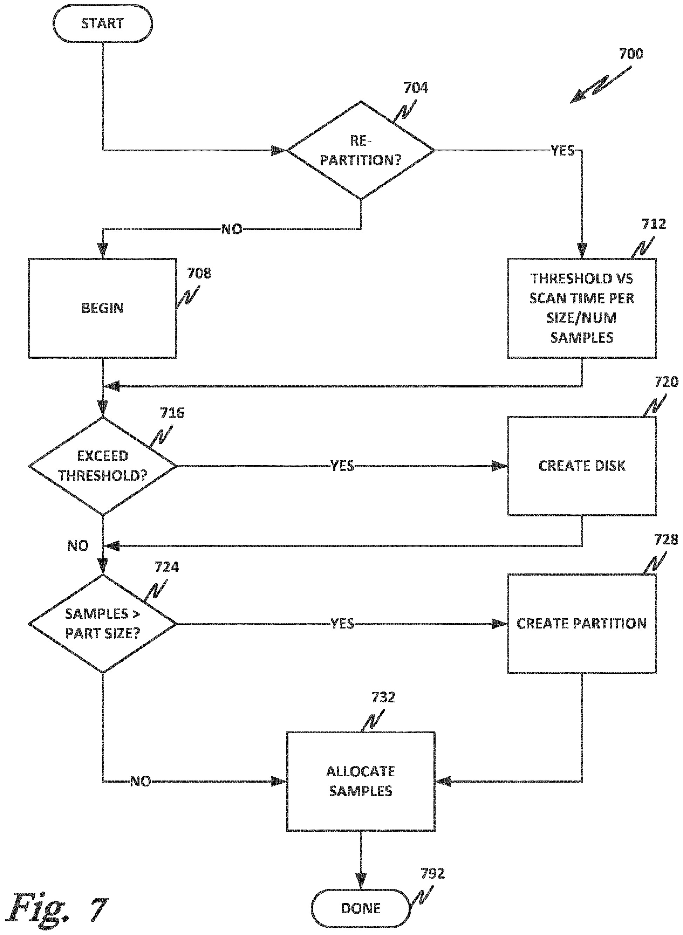

FIGURE 7 is a flowchart of a method 700 of partitioning samples. Samples may be partitioned on sample types. The method may adaptively repartition samples if the scan time exceeds a threshold set against a partition. This ensures that a scanner does not exceed the budgeted time and facilities in horizontally scaling the scanners to achieve a service level agreement (SLA) for validation of signatures.

Starting in block 704, the system determines whether this is currently a repartition operation. If this is not a repartition operation, then in block 708, partitioning begins.

Returning to block 704, if this is a repartition, then in block 712, the system checks to determine whether this threshold exceeds a scan time per size or number of samples allocated for the scanner.

In block 716, if the threshold is exceeded (coming from other block 708 or block 712), then in block 720, the system may create a new virtual disk.

Returning to block 716, if the threshold has not been exceeded, then in block 724, the system determines whether the number of samples is greater than the allowed number of samples for the particular partition.

If the number of samples exceeds the partition size, then in block 728, the system creates a new partition.

Returning to block 724, if the number of samples does not exceed the partition size, then the samples may be allocated on the current partition.

In block 732, the system allocates the samples to the correct partition for scanning.

In block 792, the method is done.

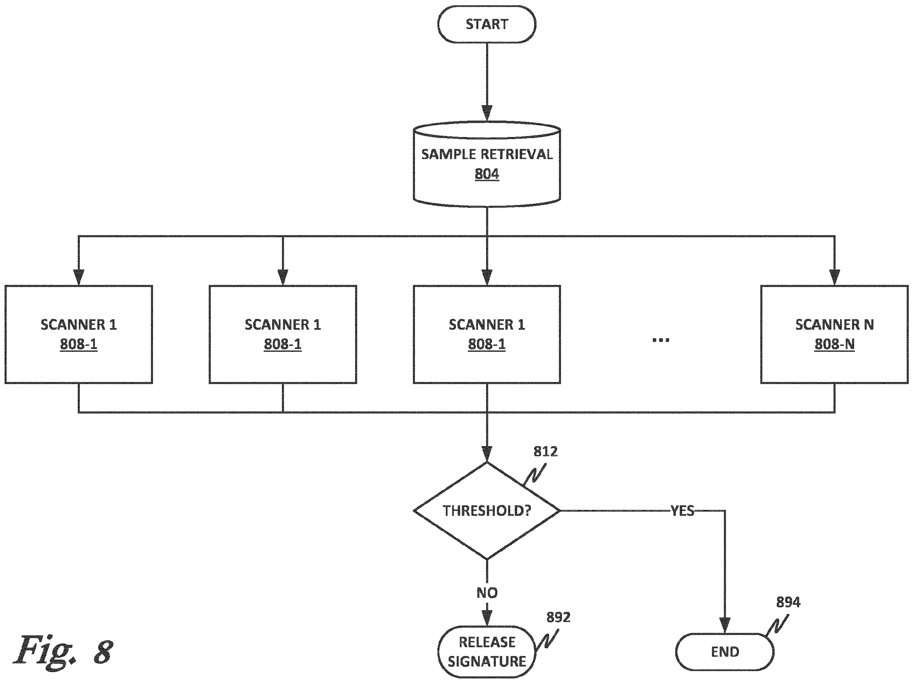

FIGURE 8 is a flowchart of a method 800 of performing parallel scanning.

Starting in block 804, the system performs the sample retrieval. This may include getting a set of downsampled clean signatures to compare to a signature of the object under analysis.

The system may then allocate a number of scanners, namely, scanner 1 808-1, scanner 2 808-2, scanner 3 808-3 through scanner N 808-N. Each scanner may be allocated its own dedicated partition to operate on, which ensures that the various scanners operate independently and do not need to wait for one another to finish data operations before they can complete their scans.

Scanners 808 then begin testing samples and, after each test, the system may compare the results to a threshold in block 812. Because the tests operate in parallel, the system does not need to wait for the whole test to be finished before getting results. Rather, if, for example, scanner 1 808-1 falses the sample, then the entire test may be deemed false and a controller may terminate all scanners 808 from performing further tests. If the threshold is met, then the sample is false, and in block 894, the sample is discarded. If the sample is not false, then in block 892, the sample is released and added to the signature database.

FIGURE 10 is a graph 1000 that illustrates benefits of discarding false-prone signatures.

In one example, false prone signatures may be discarded after a full scanning process. After the full scan of signatures is performed against the dataset, the system may combine results to declare a signature valid or invalid. A benefit of this approach is that there is an equal number of scans against each sample and the system can determine which samples to keep and discard depending upon their failure rates and prevalence. This approach may, however, utilize greater resources.

A cumulative approach may also be used. After each scan, the cumulative result can be evaluated and the following set of partitions are scanned only when the system has not already reached the threshold. As illustrated in graph 900, the number of samples in the smaller subset or downsampled set may be significantly less than the number of samples in the current signature validation set. Overall, it was found that using this approach for a month reduced compute time by more than 40 percent with an efficacy rate of greater than 97 percent.

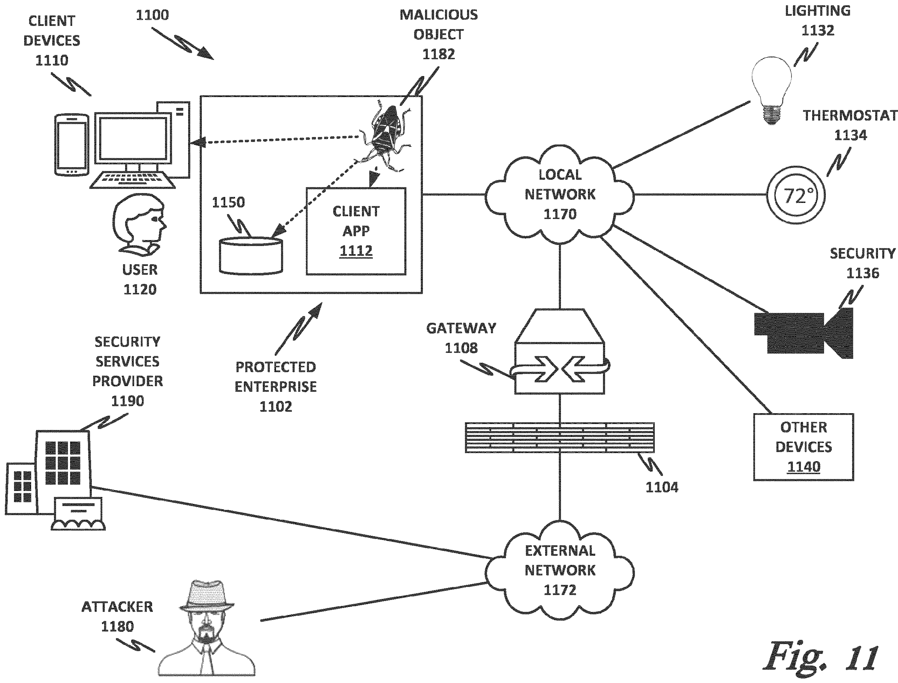

FIGURE 11 is a block diagram of a security ecosystem 1100. In the example of FIGURE 11, security ecosystem 1100 may be an enterprise, a government entity, a data center, a telecommunications provider, a "smart home" with computers, smart phones, and various internet of things (IoT) devices, or any other suitable ecosystem. Security ecosystem 1100 is provided herein as an illustrative and nonlimiting example of a system that may employ, and benefit from, the teachings of the present specification.

Security ecosystem 1100 may include one or more protected enterprises 1102. A single protected enterprise 1102 is illustrated here for simplicity, and could be a business enterprise, a government entity, a family, a nonprofit organization, a church, or any other organization that may subscribe to security services provided, for example, by SSP 1190.

Within security ecosystem 1100, one or more users 1120 operate one or more client devices 1110. A single user 1120 and single client device 1110 are illustrated here for simplicity, but a home or enterprise may have multiple users, each of which may have multiple devices, such as desktop computers, laptop computers, smart phones, tablets, hybrids, or similar.

Client devices 1110 may be communicatively coupled to one another and to other network resources via local network 1170. Local network 1170 may be any suitable network or combination of one or more networks operating on one or more suitable networking protocols, including a local area network, a home network, an intranet, a virtual network, a wide area network, a wireless network, a cellular network, or the internet (optionally accessed via a proxy, virtual machine, or other similar security mechanism) by way of nonlimiting example. Local network 1170 may also include one or more servers, firewalls, routers, switches, security appliances, antivirus servers, or other network devices, which may be single-purpose appliances, virtual machines, containers, or functions. Some functions may be provided on client devices 1110.

In this illustration, local network 1170 is shown as a single network for simplicity, but in some embodiments, local network 1170 may include any number of networks, such as one or more intranets connected to the internet. Local network 1170 may also provide access to an external network, such as the internet, via external network 1172. External network 1172 may similarly be any suitable type of network.

Local network 1170 may connect to the internet via gateway 1108, which may be responsible, among other things, for providing a logical boundary between local network 1170 and external network 1172. Local network 1170 may also provide services such as dynamic host configuration protocol (DHCP), gateway services, router services, and switching services, and may act as a security portal across local boundary 1104.

In some embodiments, gateway 1108 could be a simple home router, or could be a sophisticated enterprise infrastructure including routers, gateways, firewalls, security services, deep packet inspection, web servers, or other services.

In further embodiments, gateway 1108 may be a standalone internet appliance. Such embodiments are popular in cases in which ecosystem 1100 includes a home or small business. In other cases, gateway 1108 may run as a virtual machine or in another virtualized manner. In larger enterprises that features service function chaining (SFC) or NFV, gateway 1108 may be include one or more service functions and/or virtualized network functions.

Local network 1170 may also include a number of discrete IoT devices. For example, local network 1170 may include IoT functionality to control lighting 1132, thermostats or other environmental controls 1134, a security system 1136, and any number of other devices 1140. Other devices 1140 may include, as illustrative and nonlimiting examples, network attached storage (NAS), computers, printers, smart televisions, smart refrigerators, smart vacuum cleaners and other appliances, and network connected vehicles.

Local network 1170 may communicate across local boundary 1104 with external network 1172. Local boundary 1104 may represent a physical, logical, or other boundary. External network 1172 may include, for example, websites, servers, network protocols, and other network-based services. In one example, an attacker 1180 (or other similar malicious or negligent actor) also connects to external network 1172. An SSP 1190 may provide services to local network 1170, such as security software, security updates, network appliances, or similar. For example, MCAFEE, LLC provides a comprehensive suite of security services that may be used to protect local network 1170 and the various devices connected to it.

It may be a goal of users 1120 to successfully operate devices on local network 1170 without interference from attacker 1180. In one example, attacker 1180 is a malware author whose goal or purpose is to cause malicious harm or mischief, for example, by injecting malicious object 1182 into client device 1110. Once malicious object 1182 gains access to client device 1110, it may try to perform work such as social engineering of user 1120, a hardware-based attack on client device 1110, modifying storage 1150 (or volatile memory), modifying client application 1112 (which may be running in-memory), or gaining access to local resources. Furthermore, attacks may be directed at IoT objects. IoT objects can introduce new security challenges, as they may be highly heterogeneous, and in some cases may be designed with minimal or no security considerations. To the extent that these devices have security, it may be added on as an afterthought. Thus, IoT devices may in some cases represent new attack vectors for attacker 1180 to leverage against local network 1170.

Malicious harm or mischief may take the form of installing root kits or other malware on client devices 1110 to tamper with the system, installing spyware or adware to collect personal and commercial data, defacing websites, operating a botnet such as a spam server, or simply to annoy and harass users 1120. Thus, one aim of attacker 1180 may be to install his malware on one or more client devices 1110 or any of the IoT devices described. As used throughout this specification, malicious software ("malware") includes any object configured to provide unwanted results or do unwanted work. In many cases, malware objects will be executable objects, including, by way of nonlimiting examples, viruses, Trojans, zombies, rootkits, backdoors, worms, spyware, adware, ransomware, dialers, payloads, malicious browser helper objects, tracking cookies, loggers, or similar objects designed to take a potentially-unwanted action, including, by way of nonlimiting example, data destruction, data denial, covert data collection, browser hijacking, network proxy or redirection, covert tracking, data logging, keylogging, excessive or deliberate barriers to removal, contact harvesting, and unauthorized self-propagation. In some cases, malware could also include negligently-developed software that causes such results even without specific intent.

In enterprise contexts, attacker 1180 may also want to commit industrial or other espionage, such as stealing classified or proprietary data, stealing identities, or gaining unauthorized access to enterprise resources. Thus, attacker 1180's strategy may also include trying to gain physical access to one or more client devices 1110 and operating them without authorization, so that an effective security policy may also include provisions for preventing such access.

In another example, a software developer may not explicitly have malicious intent, but may develop software that poses a security risk. For example, a well-known and often-exploited security flaw is the so-called buffer overrun, in which a malicious user is able to enter an overlong string into an input form and thus gain the ability to execute arbitrary instructions or operate with elevated privileges on a computing device. Buffer overruns may be the result, for example, of poor input validation or use of insecure libraries, and in many cases arise in nonobvious contexts. Thus, although not malicious, a developer contributing software to an application repository or programming an IoT device may inadvertently provide attack vectors for attacker 1180. Poorly-written applications may also cause inherent problems, such as crashes, data loss, or other undesirable behavior. Because such software may be desirable itself, it may be beneficial for developers to occasionally provide updates or patches that repair vulnerabilities as they become known. However, from a security perspective, these updates and patches are essentially new objects that must themselves be validated.

Protected enterprise 1102 may contract with or subscribe to an SSP 1190, which may provide security services, updates, antivirus definitions, patches, products, and services. MCAFEE, LLC is a nonlimiting example of such an SSP that offers comprehensive security and antivirus solutions. In some cases, SSP 1190 may include a threat intelligence capability such as the global threat intelligence (GTI™) database provided by MCAFEE, LLC, or similar competing products. SSP 1190 may update its threat intelligence database by analyzing new candidate malicious objects as they appear on client networks and characterizing them as malicious or benign.

Other security considerations within security ecosystem 1100 may include parents' or employers' desire to protect children or employees from undesirable content, such as pornography, adware, spyware, age-inappropriate content, advocacy for certain political, religious, or social movements, or forums for discussing illegal or dangerous activities, by way of nonlimiting example.

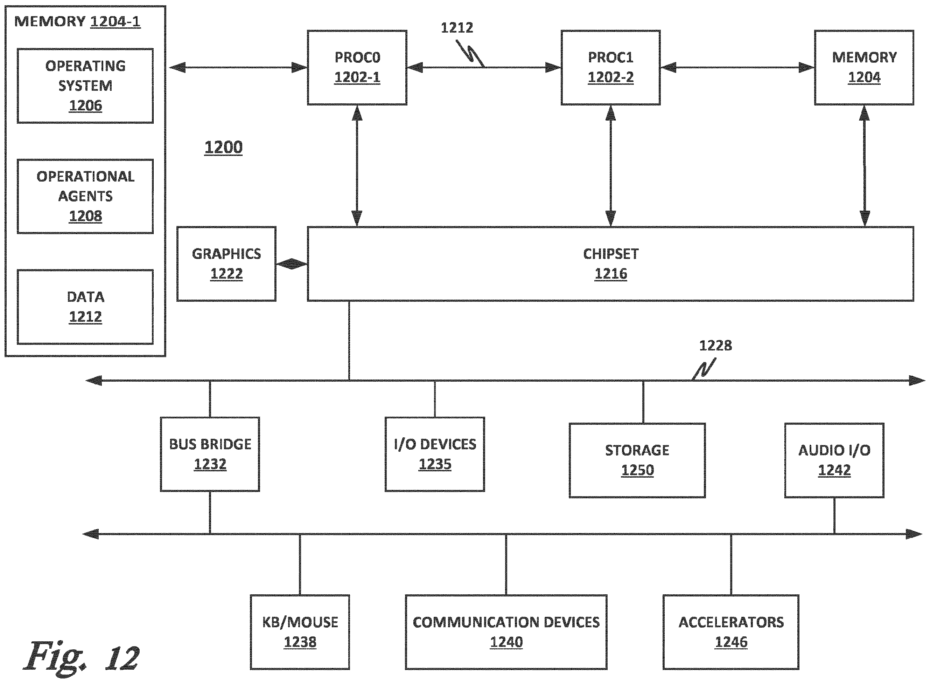

**FIGURE 12** is a block diagram of a hardware platform 1200. Although a particular configuration is illustrated here, there are many different configurations of hardware platforms, and this embodiment is intended to represent the class of hardware platforms that can provide a computing device. Furthermore, the designation of this embodiment as a "hardware platform" is not intended to require that all embodiments provide all elements in hardware. Some of the elements disclosed herein may be provided, in various embodiments, as hardware, software, firmware, microcode, microcode instructions, hardware instructions, hardware or software accelerators, or similar. Furthermore, in some embodiments, entire computing devices or platforms may be virtualized, on a single device, or in a data center where virtualization may span one or a plurality of devices. For example, in a "rackscale architecture" design, disaggregated computing resources may be virtualized into a single instance of a virtual device. In that case, all of the disaggregated resources that are used to build the virtual device may be considered part of hardware platform 1200, even though they may be scattered across a data center, or even located in different data centers.

Hardware platform 1200 is configured to provide a computing device. In various embodiments, a "computing device" may be or comprise, by way of nonlimiting example, a computer, workstation, server, mainframe, virtual machine (whether emulated or on a "bare metal" hypervisor), network appliance, container, IoT device, high performance computing (HPC) environment, a data center, a communications service provider infrastructure (e.g., one or more portions of an Evolved Packet Core), an in-memory computing environment, a computing system of a vehicle (e.g., an automobile or airplane), an industrial control system, embedded computer, embedded controller, embedded sensor, personal digital assistant, laptop computer, cellular telephone, internet protocol (IP) telephone, smart phone, tablet computer, convertible tablet computer, computing appliance, receiver, wearable computer, handheld calculator, or any other electronic, microelectronic, or microelectromechanical device for processing and communicating data. At least some of the methods and systems disclosed in this specification may be embodied by or carried out on a computing device.

In the illustrated example, hardware platform 1200 is arranged in a point-to-point (PtP) configuration. This PtP configuration is popular for personal computer (PC) and server-type devices, although it is not so limited, and any other bus type may be used.

Hardware platform 1200 is an example of a platform that may be used to implement embodiments of the teachings of this specification. For example, instructions could be stored in storage 1250. Instructions could also be transmitted to the hardware platform in an ethereal form, such as via a network interface, or retrieved from another source via any suitable interconnect. Once received (from any source), the instructions may be loaded into memory 1204, and may then be executed by one or more processor 1202 to provide elements such as an operating system 1206, operational agents 1208, or data 1212.

Hardware platform 1200 may include several processors 1202. For simplicity and clarity, only processors PROC0 1202-1 and PROC1 1202-2 are shown. Additional processors (such as 2, 4, 8, 16, 24, 32, 64, or 128 processors) may be provided as necessary, while in other embodiments, only one processor may be provided. Processors may have any number of cores, such as 1, 2, 4, 8, 16, 24, 32, 64, or 128 cores.

Processors 1202 may be any type of processor and may communicatively couple to chipset 1216 via, for example, PtP interfaces. Chipset 1216 may also exchange data with other elements, such as a high performance graphics adapter 1222. In alternative embodiments, any or all of the PtP links illustrated in FIGURE 12 could be implemented as any type of bus, or other configuration rather than a PtP link. In various embodiments, chipset 1216 may reside on the same die or package as a processor 1202 or on one or more different dies or packages. Each chipset may support any suitable number of processors 1202. A chipset 1216 (which may be a chipset, uncore, Northbridge, Southbridge, or other suitable logic and circuitry) may also include one or more controllers to couple other components to one or more central processor units (CPU).

Two memories, 1204-1 and 1204-2 are shown, connected to PROC0 1202-1 and PROC1 1202-2, respectively. As an example, each processor is shown connected to its memory in a direct memory access (DMA) configuration, though other memory architectures are possible, including ones in which memory 1204 communicates with a processor 1202 via a bus. For example, some memories may be connected via a system bus, or in a data center, memory may be accessible in a remote DMA (RDMA) configuration.

Memory 1204 may include any form of volatile or nonvolatile memory including, without limitation, magnetic media (e.g., one or more tape drives), optical media, flash, random access memory (RAM), double data rate RAM (DDR RAM) nonvolatile RAM (NVRAM), static RAM (SRAM), dynamic RAM (DRAM), persistent RAM (PRAM), data-centric (DC) persistent memory (e.g., Intel Optane/3D-crosspoint), cache, Layer 1 (L1) or Layer 2 (L2) memory, on-chip memory, registers, virtual memory region, read-only memory (ROM), flash memory, removable media, tape drive, cloud storage, or any other suitable local or remote memory component or components. Memory 1204 may be used for short, medium, and/or long-term storage. Memory 1204 may store any suitable data or information utilized by platform logic. In some embodiments, memory 1204 may also comprise storage for instructions that may be executed by the cores of processors 1202 or other processing elements (e.g., logic resident on chipsets 1216) to provide functionality.

In certain embodiments, memory 1204 may comprise a relatively low-latency volatile main memory, while storage 1250 may comprise a relatively higher-latency nonvolatile memory. However, memory 1204 and storage 1250 need not be physically separate devices, and in some examples may represent simply a logical separation of function (if there is any separation at all). It should also be noted that although DMA is disclosed by way of nonlimiting example, DMA is not the only protocol consistent with this specification, and that other memory architectures are available.

Certain computing devices provide main memory 1204 and storage 1250, for example, in a single physical memory device, and in other cases, memory 1204 and/or storage 1250 are functionally distributed across many physical devices. In the case of virtual machines or hypervisors, all or part of a function may be provided in the form of software or firmware running over a virtualization layer to provide the logical function, and resources such as memory, storage, and accelerators may be disaggregated (i.e., located in different physical locations across a data center). In other examples, a device such as a network interface may provide only the minimum hardware interfaces necessary to perform its logical operation, and may rely on a software driver to provide additional necessary logic. Thus, each logical block disclosed herein is broadly intended to include one or more logic elements configured and operable for providing the disclosed logical operation of that block. As used throughout this specification, "logic elements" may include hardware, external hardware (digital, analog, or mixed-signal), software, reciprocating software, services, drivers, interfaces, components, modules, algorithms, sensors, components, firmware, hardware instructions, microcode, programmable logic, or objects that can coordinate to achieve a logical operation.

Graphics adapter 1222 may be configured to provide a human-readable visual output, such as a command-line interface (CLI) or graphical desktop such as Microsoft Windows, Apple OSX desktop, or a Unix/Linux X Window System-based desktop. Graphics adapter 1222 may provide output in any suitable format, such as a coaxial output, composite video, component video, video graphics array (VGA), or digital outputs such as digital visual interface (DVI), FPDLink, DisplayPort, or high definition multimedia interface (HDMI), by way of nonlimiting example. In some examples, graphics adapter 1222 may include a hardware graphics card, which may have its own memory and its own graphics processing unit (GPU).

Chipset 1216 may be in communication with a bus 1228 via an interface circuit. Bus 1228 may have one or more devices that communicate over it, such as a bus bridge 1232, I/O devices 1235, accelerators 1246, communication devices 1240, and a keyboard and/or mouse 1238, by way of nonlimiting example. In general terms, the elements of hardware platform 1200 may be coupled together in any suitable manner. For example, a bus may couple any of the components together. A bus may include any known interconnect, such as a multi-drop bus, a mesh interconnect, a fabric, a ring interconnect, a round-robin protocol, a PtP interconnect, a serial interconnect, a parallel bus, a coherent (e.g., cache coherent) bus, a layered protocol architecture, a differential bus, or a Gunning transceiver logic (GTL) bus, by way of illustrative and nonlimiting example.

Communication devices 1240 can broadly include any communication not covered by a network interface and the various I/O devices described herein. This may include, for example, various universal serial bus (USB), FireWire, Lightning, or other serial or parallel devices that provide communications.

I/O Devices 1235 may be configured to interface with any auxiliary device that connects to hardware platform 1200 but that is not necessarily a part of the core architecture of hardware platform 1200. A peripheral may be operable to provide extended functionality to hardware platform 1200, and may or may not be wholly dependent on hardware platform 1200. In some cases, a peripheral may be a computing device in its own right. Peripherals may include input and output devices such as displays, terminals, printers, keyboards, mice, modems, data ports (e.g., serial, parallel, USB, Firewire, or similar), network controllers, optical media, external storage, sensors, transducers, actuators, controllers, data acquisition buses, cameras, microphones, speakers, or external storage, by way of nonlimiting example.

In one example, audio I/O 1242 may provide an interface for audible sounds, and may include in some examples a hardware sound card. Sound output may be provided in analog (such as a 3.5mm stereo jack), component ("RCA") stereo, or in a digital audio format such as S/PDIF, AES3, AES47, HDMI, USB, Bluetooth, or Wi-Fi audio, by way of nonlimiting example. Audio input may also be provided via similar interfaces, in an analog or digital form.

Bus bridge 1232 may be in communication with other devices such as a keyboard/mouse 1238 (or other input devices such as a touch screen, trackball, etc.), communication devices 1240 (such as modems, network interface devices, peripheral interfaces such as PCI or PCIe, or other types of communication devices that may communicate through a network), audio I/O 1242, a data storage device 1244, and/or accelerators 1246. In alternative embodiments, any portions of the bus architectures could be implemented with one or more PtP links.

Operating system 1206 may be, for example, Microsoft Windows, Linux, UNIX, Mac OS X, iOS, MS-DOS, or an embedded or real-time operating system (including embedded or real-time flavors of the foregoing). In some embodiments, a hardware platform 1200 may function as a host platform for one or more guest systems that invoke application (e.g., operational agents 1208).

Operational agents 1208 may include one or more computing engines that may include one or more nontransitory computer-readable mediums having stored thereon executable instructions operable to instruct a processor to provide operational functions. At an appropriate time, such as upon booting hardware platform 1200 or upon a command from operating system 1206 or a user or security administrator, a processor 1202 may retrieve a copy of the operational agent (or software portions thereof) from storage 1250 and load it into memory 1204. Processor 1202 may then iteratively execute the instructions of operational agents 1208 to provide the desired methods or functions.

As used throughout this specification, an "engine" includes any combination of one or more logic elements, of similar or dissimilar species, operable for and configured to perform one or more methods provided by the engine. In some cases, the engine may be or include a special integrated circuit designed to carry out a method or a part thereof, a field-programmable gate array (FPGA) programmed to provide a function, a special hardware or microcode instruction, other programmable logic, and/or software instructions operable to instruct a processor to perform the method. In some cases, the engine may run as a "daemon" process, background process, terminate-and-stay-resident program, a service, system extension, control panel, bootup procedure, basic in/output system (BIOS) subroutine, or any similar program that operates with or without direct user interaction. In certain embodiments, some engines may run with elevated privileges in a "driver space" associated with ring 0, 1, or 2 in a protection ring architecture. The engine may also include other hardware, software, and/or data, including configuration files, registry entries, application programming interfaces (APIs), and interactive or user-mode software by way of nonlimiting example.

In some cases, the function of an engine is described in terms of a "circuit" or "circuitry to" perform a particular function. The terms "circuit" and "circuitry" should be understood to include both the physical circuit, and in the case of a programmable circuit, any instructions or data used to program or configure the circuit.

Where elements of an engine are embodied in software, computer program instructions may be implemented in programming languages, such as an object code, an assembly language, or a high-level language such as OpenCL, FORTRAN, C, C++, JAVA, or HTML. These may be used with any compatible operating systems or operating environments. Hardware elements may be designed manually, or with a hardware description language such as Spice, Verilog, and VHDL. The source code may define and use various data structures and communication messages. The source code may be in a computer executable form (e.g., via an interpreter), or the source code may be converted (e.g., via a translator, assembler, or compiler) into a computer executable form, or converted to an intermediate form such as byte code. Where appropriate, any of the foregoing may be used to build or describe appropriate discrete or integrated circuits, whether sequential, combinatorial, state machines, or otherwise.

A network interface may be provided to communicatively couple hardware platform 1200 to a wired or wireless network or fabric. A "network," as used throughout this specification, may include any communicative platform operable to exchange data or information within or between computing devices, including, by way of nonlimiting example, a local network, a switching fabric, an ad-hoc local network, Ethernet (e.g., as defined by the IEEE 802.3 standard), Fiber Channel, InfiniBand, Wi-Fi, or other suitable standard. Intel Omni-Path Architecture (OPA), TrueScale, Ultra Path Interconnect (UPI) (formerly called QuickPath Interconnect, QPI, or KTI), FibreChannel, Ethernet, FibreChannel over Ethernet (FCoE), InfiniBand, PCI, PCIe, fiber optics, millimeter wave guide, an internet architecture, a packet data network (PDN) offering a communications interface or exchange between any two nodes in a system, a local area network (LAN), metropolitan area network (MAN), wide area network (WAN), wireless local area network (WLAN), virtual private network (VPN), intranet, plain old telephone system (POTS), or any other appropriate architecture or system that facilitates communications in a network or telephonic environment, either with or without human interaction or intervention. A network interface may include one or more physical ports that may couple to a cable (e.g., an Ethernet cable, other cable, or waveguide).

In some cases, some or all of the components of hardware platform 1200 may be virtualized, in particular the processor(s) and memory. For example, a virtualized environment may run on OS 1206, or OS 1206 could be replaced with a hypervisor or virtual machine manager. In this configuration, a virtual machine running on hardware platform 1200 may virtualize workloads. A virtual machine in this configuration may perform essentially all of the functions of a physical hardware platform.

In a general sense, any suitably-configured processor can execute any type of instructions associated with the data to achieve the operations illustrated in this specification. Any of the processors or cores disclosed herein could transform an element or an article (for example, data) from one state or thing to another state or thing. In another example, some activities outlined herein may be implemented with fixed logic or programmable logic (for example, software and/or computer instructions executed by a processor).

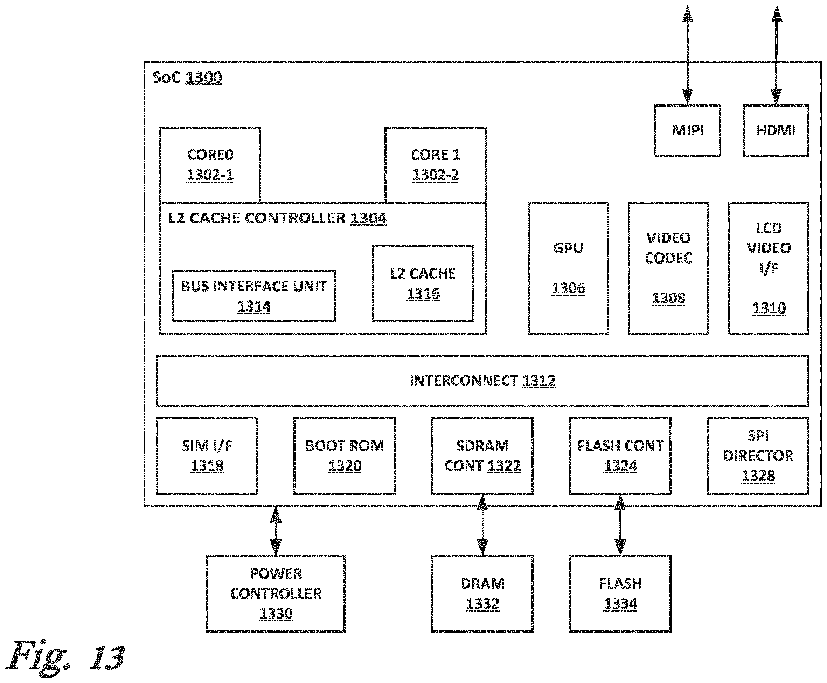

Various components of the system depicted in FIGURE 12 may be combined in a SoC architecture or in any other suitable configuration. For example, embodiments disclosed herein can be incorporated into systems including mobile devices such as smart cellular telephones, tablet computers, personal digital assistants, portable gaming devices, and similar. These mobile devices may be provided with SoC architectures in at least some embodiments. An example of such an embodiment is provided in FIGURE 13. Such an SoC (and any other hardware platform disclosed herein) may include analog, digital, and/or mixed-signal, radio frequency (RF), or similar processing elements. Other embodiments may include a multichip module (MCM), with a plurality of chips located within a single electronic package and configured to interact closely with each other through the electronic package. In various other embodiments, the computing functionalities disclosed herein may be implemented in one or more silicon cores in application-specific integrated circuits (ASICs), FPGAs, and other semiconductor chips.

**FIGURE 13** is a block illustrating selected elements of an example SoC 1300. At least some of the teachings of the present specification may be embodied on an SoC 1300, or may be paired with an SoC 1300. SoC 1300 may include, or may be paired with, an advanced reduced instruction set computer machine (ARM) component. For example, SoC 1300 may include or be paired with any ARM core, such as A-9, A-15, or similar. This architecture represents a hardware platform that may be useful in devices such as tablets and smartphones, by way of illustrative example, including Android phones or tablets, iPhone (of any version), iPad, Google Nexus, Microsoft Surface. SoC 1300 could also be integrated into, for example, a PC, server, video processing components, laptop computer, notebook computer, netbook, or touch-enabled device.

As with hardware platform 1200 above, SoC 1300 may include multiple cores 1302-1 and 1302-2. In this illustrative example, SoC 1300 also includes an L2 cache control 1304, a GPU 1306, a video codec 1308, a liquid crystal display (LCD) I/F 1310 and an interconnect 1312. L2 cache control 1304 can include a bus interface unit 1314, a L2 cache 1316. Liquid crystal display (LCD) I/F 1310 may be associated with mobile industry processor interface (MIPI)/ HDMI links that couple to an LCD.

SoC 1300 may also include a subscriber identity module (SIM) I/F 1318, a boot ROM 1320, a synchronous dynamic random access memory (SDRAM) controller 1322, a flash controller 1324, a serial peripheral interface (SPI) director 1328, a suitable power control 1330, a dynamic RAM (DRAM) 1332, and flash 1334. In addition, one or more embodiments include one or more communication capabilities, interfaces, and features such as instances of Bluetooth, a 3G modem, a global positioning system (GPS), and an 802.11 Wi-Fi.

Designers of integrated circuits such as SoC 1300 (or other integrated circuits) may use intellectual property blocks (IP blocks) to simplify system design. An IP block is a modular, self-contained hardware block that can be easily integrated into the design. Because the IP block is modular and self-contained, the integrated circuit (IC) designer need only "drop in" the IP block to use the functionality of the IP block. The system designer can then make the appropriate connections to inputs and outputs.

IP blocks are often "black boxes." In other words, the system integrator using the IP block may not know, and need not know, the specific implementation details of the IP block. Indeed, IP blocks may be provided as proprietary third-party units, with no insight into the design of the IP block by the system integrator.

For example, a system integrator designing an SoC for a smart phone may use IP blocks in addition to the processor core, such as a memory controller, a nonvolatile memory (NVM) controller, Wi-Fi, Bluetooth, GPS, a fourth or fifth-generation network (4G or 5G), an audio processor, a video processor, an image processor, a graphics engine, a GPU engine, a security controller, and many other IP blocks. In many cases, each of these IP blocks has its own embedded microcontroller.

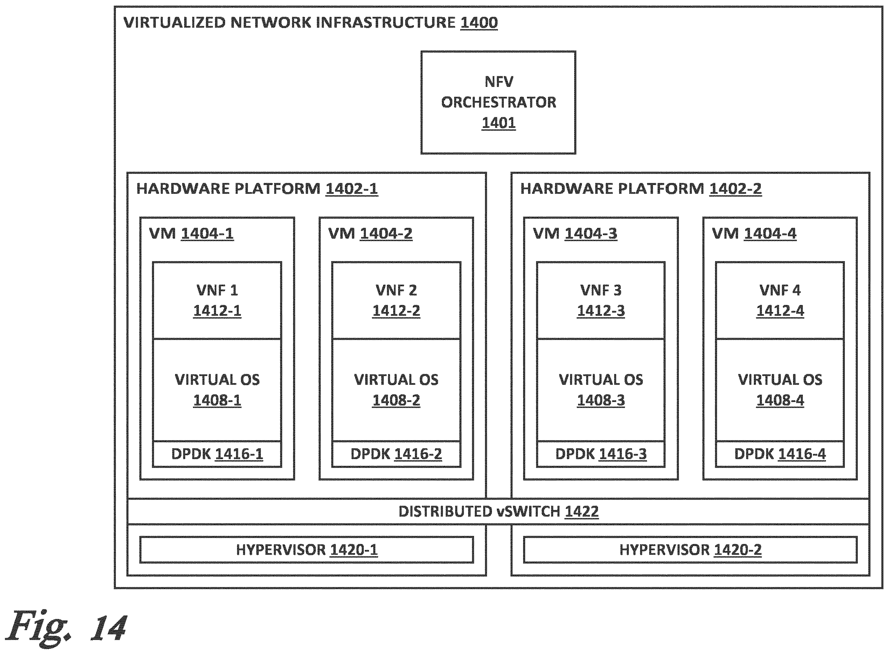

FIGURE 14 is a block diagram of a NFV infrastructure 1400. NFV is an example of virtualization, and the virtualization infrastructure here can also be used to realize traditional virtual machines (VM). Various functions described above may be realized as VMs, in particular the dedicated scanner instances, or other cloud-based services.

NFV is generally considered distinct from software defined networking (SDN), but they can interoperate together, and the teachings of this specification should also be understood to apply to SDN in appropriate circumstances. For example, virtual network functions (VNFs) may operate within the data plane of an SDN deployment. NFV was originally envisioned as a method for providing reduced capital expenditure (Capex) and operating expenses (Opex) for telecommunication services. One feature of NFV is replacing proprietary, special-purpose hardware appliances with virtual appliances running on commercial off-the-shelf (COTS) hardware within a virtualized environment. In addition to Capex and Opex savings, NFV provides a more agile and adaptable network. As network loads change, VNFs can be provisioned ("spun up") or removed ("spun down") to meet network demands. For example, in times of high load, more load balancing VNFs may be spun up to distribute traffic to more workload servers (which may themselves be VMs). In times when more suspicious traffic is experienced, additional firewalls or deep packet inspection (DPI) appliances may be needed.

Because NFV started out as a telecommunications feature, many NFV instances are focused on telecommunications. However, NFV is not limited to telecommunication services. In a broad sense, NFV includes one or more VNFs running within a network function virtualization infrastructure (NFVI), such as NFVI 1400. Often, the VNFs are inline service functions that are separate from workload servers or other nodes. These VNFs can be chained together into a service chain, which may be defined by a virtual subnetwork, and which may include a serial string of network services that provide behind-the-scenes work, such as security, logging, billing, and similar.

In the example of FIGURE 14, an NFV orchestrator 1401 may manage several VNFs 1412 running on an NFVI 1400. NFV requires nontrivial resource management, such as allocating a very large pool of compute resources among appropriate numbers of instances of each VNF, managing connections between VNFs, determining how many instances of each VNF to allocate, and managing memory, storage, and network connections. This may require complex software management, thus making NFV orchestrator 1401 a valuable system resource. Note that NFV orchestrator 1401 may provide a browser-based or graphical configuration interface, and in some embodiments may be integrated with SDN orchestration functions.

Note that NFV orchestrator 1401 itself may be virtualized (rather than a special-purpose hardware appliance). NFV orchestrator 1401 may be integrated within an existing SDN system, wherein an operations support system (OSS) manages the SDN. This may interact with cloud resource management systems (e.g., OpenStack) to provide NFV orchestration. An NFVI 1400 may include the hardware, software, and other infrastructure to enable VNFs to run. This may include a hardware platform 1402 on which one or more VMs 1404 may run. For example, hardware platform 1402-1 in this example runs VMs 1404-1 and 1404-2. Hardware platform 1402-2 runs VMs 1404-3 and 1404-4. Each hardware platform 1402 may include a respective hypervisor 1420, virtual machine manager (VMM), or similar function, which may include and run on a native (bare metal) operating system, which may be minimal so as to consume very few resources. For example, hardware platform 1402-1 has hypervisor 1420-1, and hardware platform 1402-2 has hypervisor 1420-2.

Hardware platforms 1402 may be or comprise a rack or several racks of blade or slot servers (including, e.g., processors, memory, and storage), one or more data centers, other hardware resources distributed across one or more geographic locations, hardware switches, or network interfaces. An NFVI 1400 may also include the software architecture that enables hypervisors to run and be managed by NFV orchestrator 1401.

Running on NFVI 1400 are VMs 1404, each of which in this example is a VNF providing a virtual service appliance. Each VM 1404 in this example includes an instance of the Data Plane Development Kit (DPDK) 1416, a virtual operating system 1408, and an application providing the VNF 1412. For example, VM 1404-1 has virtual OS 1408-1, DPDK 1416-1, and VNF 1412-1. VM 1404-2 has virtual OS 1408-2, DPDK 1416-2, and VNF 1412-2. VM 1404-3 has virtual OS 1408-3, DPDK 1416-3, and VNF 1412-3. VM 1404-4 has virtual OS 1408-4, DPDK 1416-4, and VNF 1412-4.

Virtualized network functions could include, as nonlimiting and illustrative examples, firewalls, intrusion detection systems, load balancers, routers, session border controllers, DPI services, network address translation (NAT) modules, or call security association.

The illustration of FIGURE 14 shows that a number of VNFs 1404 have been provisioned and exist within NFVI 1400. This FIGURE does not necessarily illustrate any relationship between the VNFs and the larger network, or the packet flows that NFVI 1400 may employ.

The illustrated DPDK instances 1416 provide a set of highly-optimized libraries for communicating across a virtual switch (vSwitch) 1422. Like VMs 1404, vSwitch 1422 is provisioned and allocated by a hypervisor 1420. The hypervisor uses a network interface to connect the hardware platform to the data center fabric (e.g., a host fabric interface (HFI)). This HFI may be shared by all VMs 1404 running on a hardware platform 1402. Thus, a vSwitch may be allocated to switch traffic between VMs 1404. The vSwitch may be a pure software vSwitch (e.g., a shared memory vSwitch), which may be optimized so that data are not moved between memory locations, but rather, the data may stay in one place, and pointers may be passed between VMs 1404 to simulate data moving between ingress and egress ports of the vSwitch. The vSwitch may also include a hardware driver (e.g., a hardware network interface IP block that switches traffic, but that connects to virtual ports rather than physical ports). In this illustration, a distributed vSwitch 1422 is illustrated, wherein vSwitch 1422 is shared between two or more physical hardware platforms 1402.

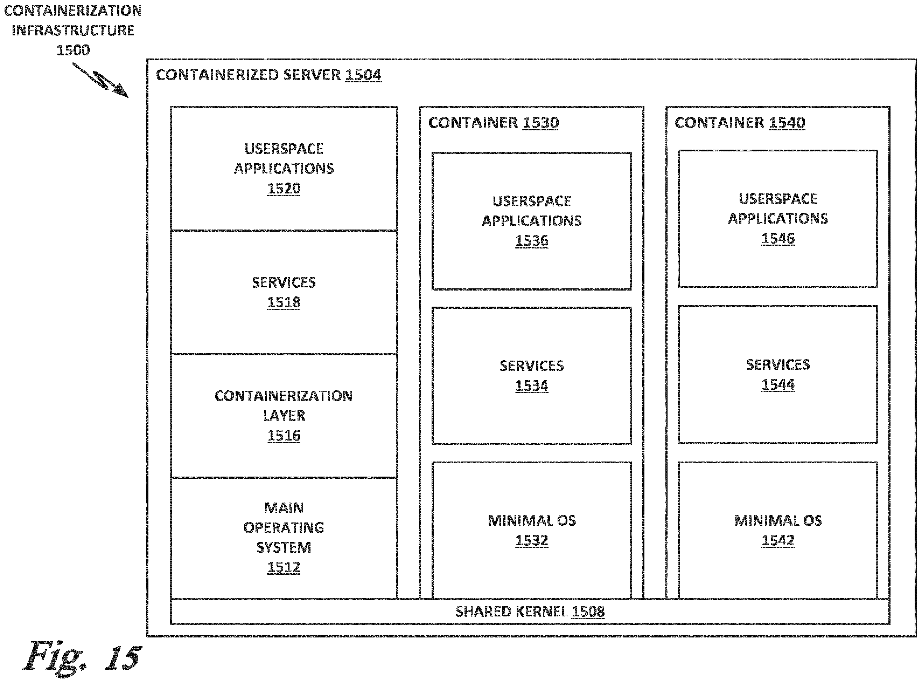

FIGURE 15 is a block diagram of selected elements of a containerization infrastructure 1500. Like virtualization, containerization is a popular form of providing a guest infrastructure. Various functions described herein may be containerized, in particular the dedicated scanner instances, or other cloud-based services.

Containerization infrastructure 1500 runs on a hardware platform such as containerized server 1504. Containerized server 1504 may provide processors, memory, one or more network interfaces, accelerators, and/or other hardware resources.

Running on containerized server 1504 is a shared kernel 1508. One distinction between containerization and virtualization is that containers run on a common kernel with the main operating system and with each other. In contrast, in virtualization, the processor and other hardware resources are abstracted or virtualized, and each virtual machine provides its own kernel on the virtualized hardware.

Running on shared kernel 1508 is main operating system 1512. Commonly, main operating system 1512 is a Unix or Linux-based operating system, although containerization infrastructure is also available for other types of systems, including Microsoft Windows systems and Macintosh systems. Running on top of main operating system 1512 is a containerization layer 1516. For example, Docker is a popular containerization layer that runs on a number of operating systems, and relies on the Docker daemon. Newer operating systems (including Fedora Linux 32 and later) that use version 2 of the kernel control groups service (cgroups v2) feature appear to be incompatible with the Docker daemon. Thus, these systems may run with an alternative known as Podman that provides a containerization layer without a daemon.

Various factions debate the advantages and/or disadvantages of using a daemon-based containerization layer (e.g., Docker) versus one without a daemon (e.g., Podman). Such debates are outside the scope of the present specification, and when the present specification speaks of containerization, it is intended to include any containerization layer, whether it requires the use of a daemon or not.

Main operating system 1512 may also provide services 1518, which provide services and interprocess communication to userspace applications 1520.

Services 1518 and userspace applications 1520 in this illustration are independent of any container.

As discussed above, a difference between containerization and virtualization is that containerization relies on a shared kernel. However, to maintain virtualization-like segregation, containers do not share interprocess communications, services, or many other resources. Some sharing of resources between containers can be approximated by permitting containers to map their internal file systems to a common mount point on the external file system. Because containers have a shared kernel with the main operating system 1512, they inherit the same file and resource access permissions as those provided by shared kernel 1508. For example, one popular application for containers is to run a plurality of web servers on the same physical hardware. The Docker daemon provides a shared socket, docker.sock, that is accessible by containers running under the same Docker daemon.

Thus, one container can be configured to provide only a reverse proxy for mapping hypertext transfer protocol (HTTP) and hypertext transfer protocol secure (HTTPS) requests to various containers. This reverse proxy container can listen on docker.sock for newly spun up containers. When a container spins up that meets certain criteria, such as by specifying a listening port and/or virtual host, the reverse proxy can map HTTP or HTTPS requests to the specified virtual host to the designated virtual port. Thus, only the reverse proxy host may listen on ports 80 and 443, and any request to subdomain1.example.com may be directed to a virtual port on a first container, while requests to subdomain2.example.com may be directed to a virtual port on a second container.

Other than this limited sharing of files or resources, which generally is explicitly configured by an administrator of containerized server 1504, the containers themselves are completely isolated from one another. However, because they share the same kernel, it is relatively easier to dynamically allocate compute resources such as CPU time and memory to the various containers. Furthermore, it is common practice to provide only a minimum set of services on a specific container, and the container does not need to include a full bootstrap loader because it shares the kernel with a containerization host (i.e. containerized server 1504).

Thus, "spinning up" a container is often relatively faster than spinning up a new virtual machine that provides a similar service. Furthermore, a containerization host does not need to virtualize hardware resources, so containers access those resources natively and directly. While this provides some theoretical advantages over virtualization, modern hypervisors-especially type 1, or "bare metal," hypervisors-provide such near-native performance that this advantage may not always be realized.

In this example, containerized server 1504 hosts two containers, namely container 1530 and container 1540.

Container 1530 may include a minimal operating system 1532 that runs on top of shared kernel 1508. Note that a minimal operating system is provided as an illustrative example, and is not mandatory. In fact, container 1530 may perform as full an operating system as is necessary or desirable. Minimal operating system 1532 is used here as an example simply to illustrate that in common practice, the minimal operating system necessary to support the function of the container (which in common practice, is a single or monolithic function) is provided.

On top of minimal operating system 1532, container 1530 may provide one or more services 1534. Finally, on top of services 1534, container 1530 may also provide userspace applications 1536, as necessary.

Container 1540 may include a minimal operating system 1542 that runs on top of shared kernel 1508. Note that a minimal operating system is provided as an illustrative example, and is not mandatory. In fact, container 1540 may perform as full an operating system as is necessary or desirable. Minimal operating system 1542 is used here as an example simply to illustrate that in common practice, the minimal operating system necessary to support the function of the container (which in common practice, is a single or monolithic function) is provided.

On top of minimal operating system 1542, container 1540 may provide one or more services 1544. Finally, on top of services 1544, container 1540 may also provide userspace applications 1546, as necessary.

Using containerization layer 1516, containerized server 1504 may run discrete containers, each one providing the minimal operating system and/or services necessary to provide a particular function. For example, containerized server 1504 could include a mail server, a web server, a secure shell server, a file server, a weblog, cron services, a database server, and many other types of services. In theory, these could all be provided in a single container, but security and modularity advantages are realized by providing each of these discrete functions in a discrete container with its own minimal operating system necessary to provide those services.

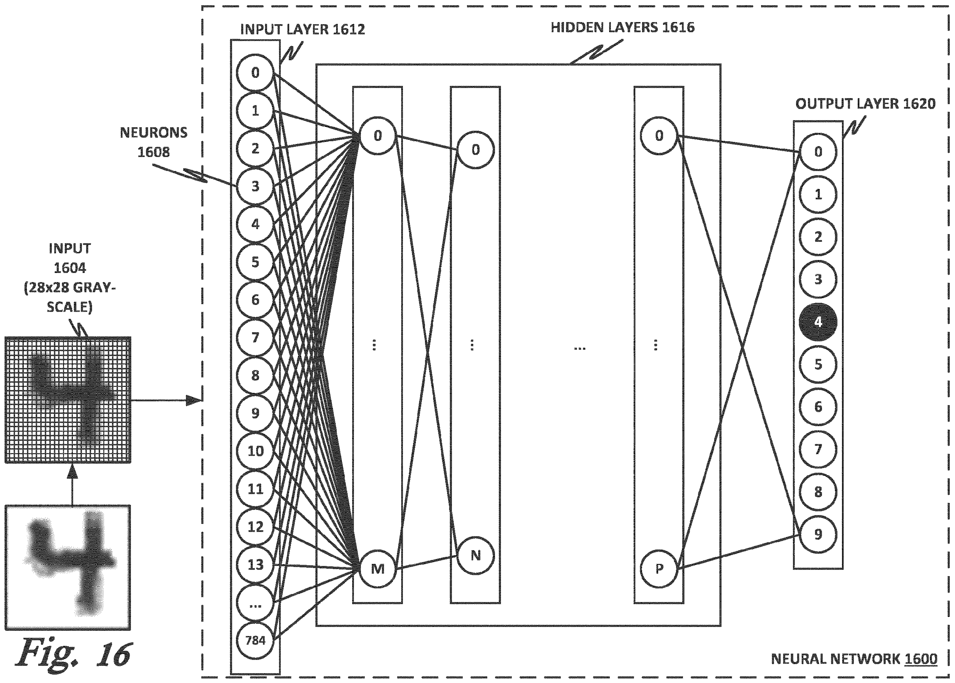

FIGURES 16 - 18 illustrate selected elements of an AI system or architecture. In these FIGURES, an elementary neural network is used as a representative embodiment of an AI or ML architecture or engine. This should be understood to be a nonlimiting example, and other ML or AI architectures are available, including for example symbolic learning, robotics, computer vision, pattern recognition, statistical learning, speech recognition, natural language processing, deep learning, convolutional neural networks, recurrent neural networks, object recognition and/or others.

FIGURE 16 illustrates ML according to a "textbook" problem with real-world applications. In this case, a neural network 1600 is tasked with recognizing characters. A neural network is only one example of an ML algorithm, and other algorithms may be used herein, including in particular a clustering algorithm, which may be used to compute a "distance" between a known object such as a clean object and an object under analysis. A neural network may be used for other aspects of this disclosure.

To simplify the description, neural network 1600 is tasked only with recognizing single digits in the range of 0 through 9. These are provided as an input image 1604. In this example, input image 1604 is a 28 x 28-pixel 8-bit grayscale image. In other words, input image 1604 is a square that is 28 pixels wide and 28 pixels high. Each pixel has a value between 0 and 255, with 0 representing white or no color, and 255 representing black or full color, with values in between representing various shades of gray. This provides a straightforward problem space to illustrate the operative principles of a neural network. Only selected elements of neural network 1600 are illustrated in this FIGURE, and that real-world applications may be more complex, and may include additional features, such as the use of multiple channels (e.g.,

for a color image, there may be three distinct channels for red, green, and blue). Additional layers of complexity or functions may be provided in a neural network, or other AI architecture, to meet the demands of a particular problem. Indeed, the architecture here is sometimes referred to as the "Hello World" problem of ML, and is provided as but one example of how the ML or AI functions of the present specification could be implemented.

In this case, neural network 1600 includes an input layer 1612 and an output layer 1620. In principle, input layer 1612 receives an input such as input image 1604, and at output layer 1620, neural network 1600 "lights up" a perceptron that indicates which character neural network 1600 thinks is represented by input image 1604.

Between input layer 1612 and output layer 1620 are some number of hidden layers 1616. The number of hidden layers 1616 will depend on the problem to be solved, the available compute resources, and other design factors. In general, the more hidden layers 1616, and the more neurons per hidden layer, the more accurate the neural network 1600 may become. However, adding hidden layers and neurons also increases the complexity of the neural network, and its demand on compute resources. Thus, some design skill is required to determine the appropriate number of hidden layers 1616, and how many neurons are to be represented in each hidden layer 1616.

Input layer 1612 includes, in this example, 784 "neurons" 1608. Each neuron of input layer 1612 receives information from a single pixel of input image 1604. Because input image 1604 is a 28 x 28 grayscale image, it has 784 pixels. Thus, each neuron in input layer 1612 holds 8 bits of information, taken from a pixel of input layer 1604. This 8-bit value is the "activation" value for that neuron.

Each neuron in input layer 1612 has a connection to each neuron in the first hidden layer in the network. In this example, the first hidden layer has neurons labeled 0 through M. Each of the M + 1 neurons is connected to all 784 neurons in input layer 1612. Each neuron in hidden layer 1616 includes a kernel or transfer function, which is described in greater detail below. The kernel or transfer function determines how much "weight" to assign each connection from input layer 1612. In other words, a neuron in hidden layer 1616 may think that some pixels are more important to its function than other pixels. Based on this transfer function, each neuron computes an activation value for itself, which may be for example a decimal number between 0 and 1.

A common operation for the kernel is convolution, in which case the neural network may be referred to as a "convolutional neural network" (CNN). The case of a network with multiple hidden layers between the input layer and output layer may be referred to as a "deep neural network" (DNN). A DNN may be a CNN, and a CNN may be a DNN, but neither expressly implies the other.

Each neuron in this layer is also connected to each neuron in the next layer, which has neurons from 0 to N. As in the previous layer, each neuron has a transfer function that assigns a particular weight to each of its M + 1 connections and computes its own activation value. In this manner, values are propagated along hidden layers 1616, until they reach the last layer, which has P + 1 neurons labeled 0 through P. Each of these P + 1 neurons has a connection to each neuron in output layer 1620. Output layer 1620 includes a number of neurons known as perceptrons that compute an activation value based on their weighted connections to each neuron in the last hidden layer 1616. The final activation value computed at output layer 1620 may be thought of as a "probability" that input image 1604 is the value represented by the perceptron. For example, if neural network 1600 operates perfectly, then perceptron 4 would have a value of 1.00, while each other perceptron would have a value of 0.00. This would represent a theoretically perfect detection. In practice, detection is not generally expected to be perfect, but it is desirable for perceptron 4 to have a value close to 1, while the other perceptrons have a value close to 0.

Conceptually, neurons in the hidden layers 1616 may correspond to "features." For example, in the case of computer vision, the task of recognizing a character may be divided into recognizing features such as the loops, lines, curves, or other features that make up the character. Recognizing each loop, line, curve, etc., may be further divided into recognizing smaller elements (e.g., line or curve segments) that make up that feature. Moving through the hidden layers from left to right, it is often expected and desired that each layer recognizes the "building blocks" that make up the features for the next layer. In practice, realizing this effect is itself a nontrivial problem, and may require greater sophistication in programming and training than is fairly represented in this simplified example.

The activation value for neurons in the input layer is simply the value taken from the corresponding pixel in the bitmap. The activation value (a) for each neuron in succeeding layers is computed according to a transfer function, which accounts for the "strength" of each of its connections to each neuron in the previous layer. The transfer can be written as a sum of weighted inputs (i.e., the activation value (a) received from each neuron in the previous layer, multiplied by a weight representing the strength of the neuron-to-neuron connection (w)), plus a bias value.

The weights may be used, for example, to "select" a region of interest in the pixmap that corresponds to a "feature" that the neuron represents. Positive weights may be used to select the region, with a higher positive magnitude representing a greater probability that a pixel in that region (if the activation value comes from the input layer) or a subfeature (if the activation value comes from a hidden layer) corresponds to the feature. Negative weights may be used for example to actively "de-select" surrounding areas or subfeatures (e.g., to mask out lighter values on the edge), which may be used for example to clean up noise on the edge of the feature. Pixels or subfeatures far removed from the feature may have for example a weight of zero, meaning those pixels should not contribute to examination of the feature.

The bias (b) may be used to set a "threshold" for detecting the feature. For example, a large negative bias indicates that the "feature" should be detected only if it is strongly detected, while a large positive bias makes the feature much easier to detect.

The biased weighted sum yields a number with an arbitrary sign and magnitude. This real number can then be normalized to a final value between 0 and 1, representing (conceptually) a probability that the feature this neuron represents was detected from the inputs received from the previous layer. Normalization may include a function such as a step function, a sigmoid, a piecewise linear function, a Gaussian distribution, a linear function or regression, or the popular "rectified linear unit" (ReLU) function. In the examples of this specification, a sigmoid function notation ($\sigma$) is used by way of illustrative example, but it should be understood to stand for any normalization function or algorithm used to compute a final activation value in a neural network.

The transfer function for each neuron in a layer yields a scalar value. For example, the activation value for neuron "0" in layer "1" (the first hidden layer), may be written as:

$$a_0^{(1)} = \sigma(w_0 a_0^{(0)} + w_1 a_1^{(0)} + ... w_{783} a_{783}^{(0)} + b)$$

In this case, it is assumed that layer 0 (input layer 1612) has 784 neurons. Where the previous layer has "$n$" neurons, the function can be generalized as:

$$a_0^{(1)} = \sigma(w_0 a_0^{(0)} + w_1 a_1^{(0)} + ... w_n a_n^{(0)} + b)$$

A similar function is used to compute the activation value of each neuron in layer 1 (the first hidden layer), weighted with that neuron's strength of connections to each neuron in layer 0, and biased with some threshold value. As discussed above, the sigmoid function shown here is intended to stand for any function that normalizes the output to a value between 0 and 1.

The full transfer function for layer 1 (with $k$ neurons in layer 1) may be written in matrix notation as:

$$\mathbf{a}^{(1)} = \sigma\left(\begin{bmatrix} w_{0,0} & \cdots & w_{0,n} \\ \vdots & \ddots & \vdots \\ w_{(k,0)} & \cdots & w_{k,n} \end{bmatrix}\begin{bmatrix} a_0^{(0)} \\ \vdots \\ a_n^{(0)} \end{bmatrix} + \begin{bmatrix} b_0 \\ \vdots \\ b_n \end{bmatrix}\right)$$

More compactly, the full transfer function for layer 1 can be written in vector notation as:

$$\mathbf{a}^{(1)} = \sigma(\mathbf{W}\mathbf{a}^{(0)} + \mathbf{b})$$

Neural connections and activation values are propagated throughout the hidden layers 1616 of the network in this way, until the network reaches output layer 1620. At output layer 1620, each neuron is a "bucket" or classification, with the activation value representing a probability that the input object should be classified to that perceptron. The classifications may be mutually exclusive or multinominal. For example, in the computer vision example of character recognition, a character may best be assigned only one value, or in other words, a single character is not expected to be simultaneously both a "4" and a "9." In that case, the neurons in output layer 1620 are binomial perceptrons. Ideally, only one value is above the threshold, causing the perceptron to metaphorically "light up," and that value is selected. In the case where multiple perceptrons light up, the one with the highest probability may be selected. The result is that only one value (in this case, "4") should be lit up, while the rest should be "dark." Indeed, if the neural network were theoretically perfect, the "4" neuron would have an activation value of 1.00, while each other neuron would have an activation value of 0.00.

In the case of multinominal perceptrons, more than one output may be lit up. For example, a neural network may determine that a particular document has high activation values for perceptrons corresponding to several departments, such as Accounting, Information Technology (IT), and Human Resources. On the other hand, the activation values for perceptrons for Legal, Manufacturing, and Shipping are low. In the case of multinominal classification, a threshold may be defined, and any neuron in the output layer with a probability above the threshold may be considered a "match" (e.g., the document is relevant to those departments). Those below the threshold are considered not a match (e.g., the document is not relevant to those departments).

The weights and biases of the neural network act as parameters, or "controls," wherein features in a previous layer are detected and recognized. When the neural network is first initialized, the weights and biases may be assigned randomly or pseudo-randomly. Thus, because the weights-and-biases controls are garbage, the initial output is expected to be garbage. In the case of a "supervised" learning algorithm, the network is refined by providing a "training" set, which includes objects with known results. Because the correct answer for each object is known, training sets can be used to iteratively move the weights and biases away from garbage values, and toward more useful values.

A common method for refining values includes "gradient descent" and "back-propagation." An illustrative gradient descent method includes computing a "cost" function, which measures the error in the network. For example, in the illustration, the "4" perceptron ideally has a value of "1.00," while the other perceptrons have an ideal value of "0.00." The cost function takes the difference between each output and its ideal value, squares the difference, and then takes a sum of all of the differences. Each training example will have its own computed cost. Initially, the cost function is very large, because the network does not know how to classify objects. As the network is trained and refined, the cost function value is expected to get smaller, as the weights and biases are adjusted toward more useful values.

With, for example, 100,000 training examples in play, an average cost (e.g., a mathematical mean) can be computed across all 100,00 training examples. This average cost provides a quantitative measurement of how "badly" the neural network is doing its detection job.

The cost function can thus be thought of as a single, very complicated formula, where the inputs are the parameters (weights and biases) of the network. Because the network may have thousands or even millions of parameters, the cost function has thousands or millions of input variables. The output is a single value representing a quantitative measurement of the error of the network. The cost function can be represented as:

$$C(\mathbf{w})$$

Wherein **w** is a vector containing all of the parameters (weights and biases) in the network. The minimum (absolute and/or local) can then be represented as a trivial calculus problem, namely:

$$\frac{dC}{dw}(\mathbf{w}) = 0$$

Solving such a problem symbolically may be prohibitive, and in some cases not even possible, even with heavy computing power available. Rather, neural networks commonly solve the minimizing problem numerically. For example, the network can compute the slope of the cost function at any given point, and then shift by some small amount depending on whether the slope is positive or negative. The magnitude of the adjustment may depend on the magnitude of the slope. For example, when the slope is large, it is expected that the local minimum is "far away," so larger adjustments are made. As the slope lessens, smaller adjustments are made to avoid badly overshooting the local minimum. In terms of multi-vector calculus, this is a gradient function of many variables:

$$-\nabla C(\mathbf{w})$$

The value of - VC is simply a vector of the same number of variables as **w,** indicating which direction is "down" for this multivariable cost function. For each value in -VC, the sign of each scalar tells the network which "direction" the value needs to be nudged, and the magnitude of each scalar can be used to infer which values are most "important" to change.

Gradient descent involves computing the gradient function, taking a small step in the "downhill" direction of the gradient (with the magnitude of the step depending on the magnitude of the gradient), and then repeating until a local minimum has been found within a threshold.

While finding a local minimum is relatively straightforward once the value of -VC, finding an absolutel minimum is many times harder, particularly when the function has thousands or millions of variables. Thus, common neural networks consider a local minimum to be "good enough," with adjustments possible if the local minimum yields unacceptable results. Because the cost function is ultimately an average error value over the entire training set, minimizing the cost function yields a (locally) lowest average error.

In many cases, the most difficult part of gradient descent is computing the value of - fie. As mentioned above, computing this symbolically or exactly would be prohibitively difficult. A more practical method is to use back-propagation to numerically approximate a value for - VC. Back-propagation may include, for example, examining an individual perceptron at the output layer, and determining an average cost value for that perceptron across the whole training set. Taking the "4" perceptron as an example, if the input image is a 4, it is desirable for the perceptron to have a value of 1.00, and for any input images that are not a 4, it is desirable to have a value of 0.00. Thus, an overall or average desired adjustment for the "4" perceptron can be computed.

However, the perceptron value is not hard-coded, but rather depends on the activation values received from the previous layer. The parameters of the perceptron itself (weights and bias) can be adjusted, but it may also be desirable to receive different activation values from the previous layer. For example, where larger activation values are received from the previous layer, the weight is multiplied by a larger value, and thus has a larger effect on the final activation value of the perceptron. The perceptron metaphorically "wishes" that certain activations from the previous layer were larger or smaller. Those wishes can be back-propagated to the previous layer neurons.

At the next layer, the neuron accounts for the wishes from the next downstream layer in determining its own preferred activation value. Again, at this layer, the activation values are not hard-coded. Each neuron can adjust its own weights and biases, and then back-propagate changes to the activation values that it wishes would occur. The back-propagation continues, layer by layer, until the weights and biases of the first hidden layer are set. This layer cannot back-propagate desired changes to the input layer, because the input layer receives activation values directly from the input image.

After a round of such nudging, the network may receive another round of training with the same or a different training data set, and the process is repeated until a local and/or global minimum value is found for the cost function.

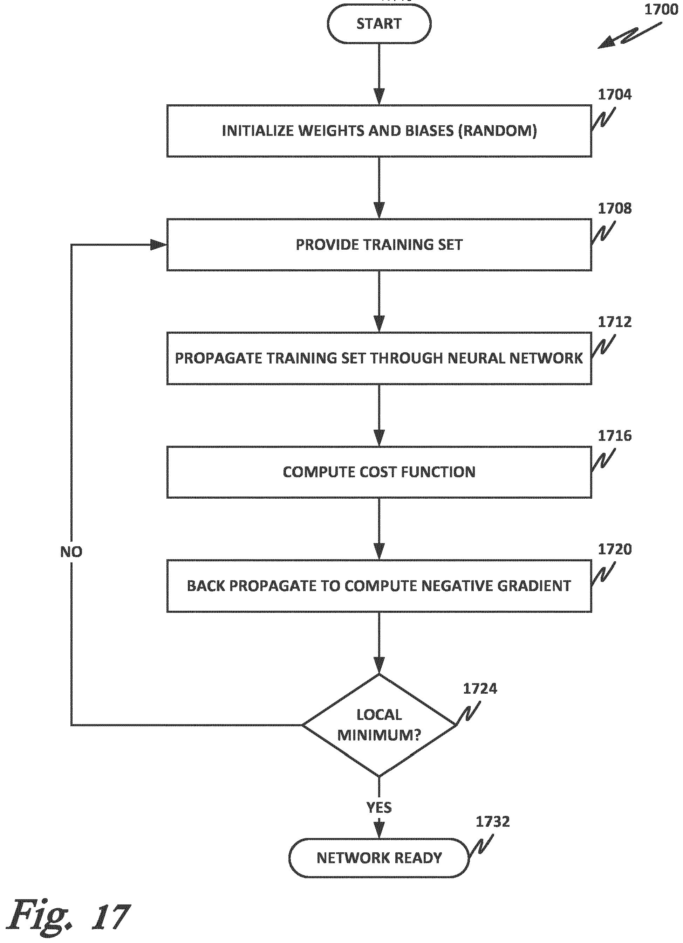

**FIGURE 17** is a flowchart of a method 1700. Method 1700 may be used to train a neural network, such as neural network 1600 of FIGURE 16.

In block 1704, the network is initialized. Initially, neural network 1600 includes some number of neurons. Each neuron includes a transfer function or kernel. In the case of a neural network, each neuron includes parameters such as the weighted sum of values of each neuron from the previous layer, plus a bias. The final value of the neuron may be normalized to a value between 0 and 1, using a function such as the sigmoid or ReLU. Because the untrained neural network knows nothing about its problem space, and because it would be very difficult to manually program the neural network to perform the desired function, the parameters for each neuron may initially be set to just some random value. For example, the values may be selected using a pseudorandom number generator of a CPU, and then assigned to each neuron.

In block 1708, the neural network is provided a training set. In some cases, the training set may be divided up into smaller groups. For example, if the training set has 100,000 objects, this may be divided into 1,000 groups, each having 100 objects. These groups can then be used to incrementally train the neural network. In block 1708, the initial training set is provided to the neural network. Alternatively, the full training set could be used in each iteration.

In block 1712, the training data are propagated through the neural network. Because the initial values are random, and are therefore essentially garbage, it is expected that the output will also be a garbage value. In other words, if neural network 1600 of FIGURE 16 has not been trained, when input image 1604 is fed into the neural network, it is not expected with the first training set that output layer 1620 will light up perceptron 4. Rather, the perceptrons may have values that are all over the map, with no clear winner, and with very little relation to the number 4.

In block 1716, a cost function is computed as described above. For example, in neural network 1600, it is desired for perceptron 4 to have a value of 1.00, and for each other perceptron to have a value of 0.00. The difference between the desired value and the actual output value is computed and squared. Individual cost functions can be computed for each training input, and the total cost function for the network can be computed as an average of the individual cost functions.

In block 1720, the network may then compute a negative gradient of this cost function to seek a local minimum value of the cost function, or in other words, the error. For example, the system may use back-propagation to seek a negative gradient numerically. After computing the negative gradient, the network may adjust parameters (weights and biases) by some amount in the "downward" direction of the negative gradient.

After computing the negative gradient, in decision block 1724, the system determines whether it has reached a local minimum (e.g., whether the gradient has reached 0 within the threshold). If the local minimum has not been reached, then the neural network has not been adequately trained, and control returns to block 1708 with a new training set. The training sequence continues until, in block 1724, a local minimum has been reached.

Now that a local minimum has been reached and the corrections have been back-propagated, in block 1732, the neural network is ready.

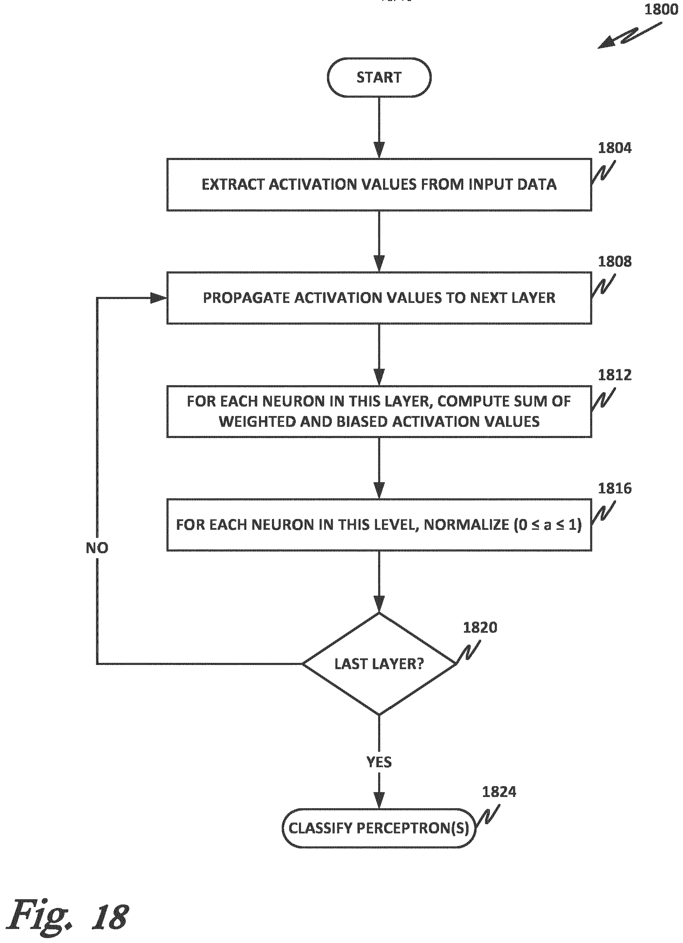

**FIGURE 18** is a flowchart of a method 1800. Method 1800 illustrates a method of using a neural network, such as network 1600 of FIGURE 16, to classify an object.

In block 1804, the network extracts the activation values from the input data. For example, in the example of FIGURE 16, each pixel in input image 1604 is assigned as an activation value to a neuron 1608 in input layer 1612.

In block 1808, the network propagates the activation values from the current layer to the next layer in the neural network. For example, after activation values have been extracted from the input image, those values may be propagated to the first hidden layer of the network.

In block 1812, for each neuron in the current layer, the neuron computes a sum of weighted and biased activation values received from each neuron in the previous layer. For example, in the illustration of FIGURE 16, neuron 0 of the first hidden layer is connected to each neuron in input layer 1612. A sum of weighted values is computed from those activation values, and a bias is applied.

In block 1816, for each neuron in the current layer, the network normalizes the activation values by applying a function such as sigmoid, ReLU, or some other function.

In decision block 1820, the network determines whether it has reached the last layer in the network. If this is not the last layer, then control passes back to block 1808, where the activation values in this layer are propagated to the next layer.

Returning to decision block 1820, If the network is at the last layer, then the neurons in this layer are perceptrons that provide final output values for the object. In terminal 1824, the perceptrons are classified and used as output values.

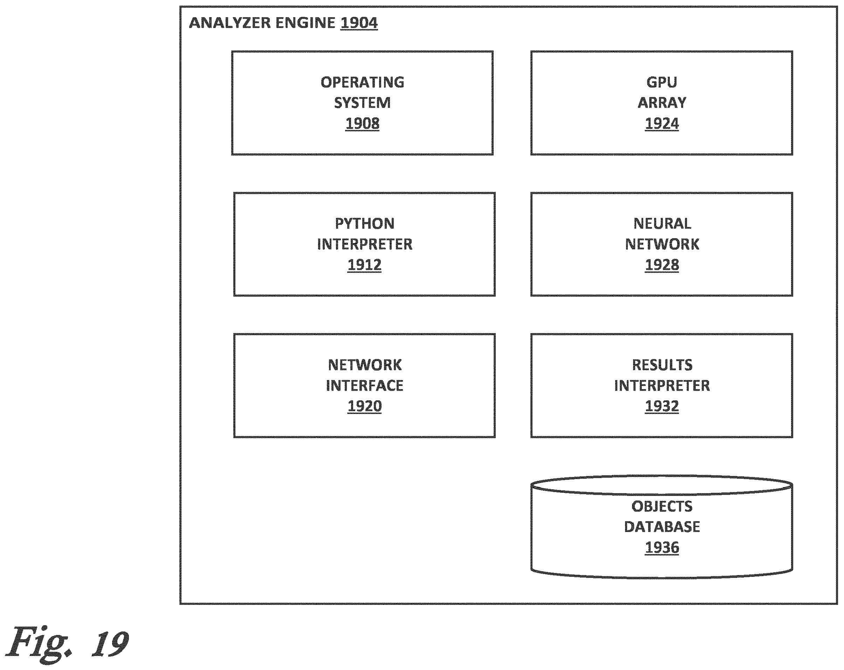

**FIGURE 19** is a block diagram illustrating selected elements of an analyzer engine 1904. Analyzer engine 1904 may be configured to provide analysis services, such as via a neural network. FIGURE 19 illustrates a platform for providing analysis services. Analysis, such as neural analysis and other ML models, may be used in some embodiments to provide one or more features of the present disclosure.

Note that analyzer engine 1904 is illustrated here as a single modular object, but in some cases, different aspects of analyzer engine 1904 could be provided by separate hardware, or by separate guests (e.g., VMs or containers) on a hardware system.

Analyzer engine 1904 includes an operating system 1908. Commonly, operating system 1908 is a Linux operating system, although other operating systems, such as Microsoft Windows, Mac OS X, UNIX, or similar could be used. Analyzer engine 1904 also includes a Python interpreter 1912, which can be used to run Python programs. A Python module known as Numerical Python (NumPy) is often used for neural network analysis. Although this is a popular choice, other non-Python or non-NumPy systems could also be used. For example, the neural network could be implemented in Matrix Laboratory (MATLAB), C, C++, Fortran, R, or some other compiled or interpreted computer language.

GPU array 1924 may include an array of graphics processing units that may be used to carry out the neural network functions of neural network 1928. Note that GPU arrays are a popular choice for this kind of processing, but neural networks can also be implemented in CPUs, or in ASICs or FPGAs that are specially designed to implement the neural network.

Neural network 1928 includes the actual code for carrying out the neural network, and as mentioned above, is commonly programmed in Python.

Results interpreter 1932 may include logic separate from the neural network functions that can be used to operate on the outputs of the neural network to assign the object for particular classification, perform additional analysis, and/or provide a recommended remedial action.

Objects database 1936 may include a database of known malware objects and their classifications. Neural network 1928 may initially be trained on objects within objects database 1936, and as new objects are identified, objects database 1936 may be updated with the results of additional neural network analysis.

Once final results have been obtained, the results may be sent to an appropriate destination via network interface 1920.

The foregoing outlines features of several embodiments so that those skilled in the art may better understand various aspects of the present disclosure. The foregoing detailed description sets forth examples of apparatuses, methods, and systems relating to a system for a fast-fail model for signature validation in accordance with one or more embodiments of the present disclosure. Features such as structure(s), function(s), and/or characteristic(s), for example, are described with reference to one embodiment as a matter of convenience; various embodiments may be implemented with any suitable one or more of the described features.

As used throughout this specification, the phrase "an embodiment" is intended to refer to one or more embodiments. Furthermore, different uses of the phrase "an embodiment" may refer to different embodiments. The phrases "in another embodiment" or "in a different embodiment" refer to am embodiment different from the one previously described, or the same embodiment with additional features. For example, "in an embodiment, features may be present. In another embodiment, additional features may be present." The foregoing example could first refer to an embodiment with features A, B, and C, while the second could refer to an embodiment with features A, B, C, and D, with features, A, B, and D, with features, D, E, and F, or any other variation.

In the foregoing description, various aspects of the illustrative implementations may be described using terms commonly employed by those skilled in the art to convey the substance of their work to others skilled in the art. It will be apparent to those skilled in the art that the embodiments disclosed herein may be practiced with only some of the described aspects. For purposes of explanation, specific numbers, materials, and configurations are set forth to provide a thorough understanding of the illustrative implementations. In some cases, the embodiments disclosed may be practiced without the specific details. In other instances, well-known features are omitted or simplified so as not to obscure the illustrated embodiments.

For the purposes of the present disclosure and the appended claims, the article "a" refers to one or more of an item. The phrase "A or B" is intended to encompass the "inclusive or," e.g., A, B, or (A and B). "A and/or B" means A, B, or (A and B). For the purposes of the present disclosure, the phrase "A, B, and/or C" means A, B, C, (A and B), (A and C), (B and C), or (A, B, and C).

The embodiments disclosed can readily be used as the basis for designing or modifying other processes and structures to carry out the teachings of the present specification. Any equivalent constructions to those disclosed do not depart from the spirit and scope of the present disclosure. Design considerations may result in substitute arrangements, design choices, device possibilities, hardware configurations, software implementations, and equipment options.

As used throughout this specification, a "memory" is expressly intended to include both a volatile memory and a nonvolatile memory. Thus, for example, an "engine" as described above could include instructions encoded within a volatile or nonvolatile memory that, when executed, instruct a processor to perform the operations of any of the methods or procedures disclosed herein. It is expressly intended that this configuration reads on a computing apparatus "sitting on a shelf" in a non-operational state. For example, in this example, the "memory" could include one or more tangible, nontransitory computer-readable storage media that contain stored instructions. These instructions, in conjunction with the hardware platform (including a processor) on which they are stored may constitute a computing apparatus.

In other embodiments, a computing apparatus may also read on an operating device. For example, in this configuration, the "memory" could include a volatile or run-time memory (e.g., RAM), where instructions have already been loaded. These instructions, when fetched by the processor and executed, may provide methods or procedures as described herein.

In yet another embodiment, there may be one or more tangible, nontransitory computer-readable storage media having stored thereon executable instructions that, when executed, cause a hardware platform or other computing system, to carry out a method or procedure. For example, the instructions could be executable object code, including software instructions executable by a processor. The one or more tangible, nontransitory computer-readable storage media could include, by way of illustrative and nonlimiting example, a magnetic media (e.g., hard drive), a flash memory, a ROM, optical media (e.g., CD, DVD, Blu-Ray), nonvolatile random access memory (NVRAM), nonvolatile memory (NVM) (e.g., Intel 3D Xpoint), or other nontransitory memory.

There are also provided herein certain methods, illustrated for example in flow charts and/or signal flow diagrams. The order or operations disclosed in these methods discloses one illustrative ordering that may be used in some embodiments, but this ordering is no intended to be restrictive, unless expressly stated otherwise. In other embodiments, the operations may be carried out in other logical orders. In general, one operation should be deemed to necessarily precede another only if the first operation provides a result required for the second operation to execute. Furthermore, the sequence of operations itself should be understood to be a nonlimiting example. In appropriate embodiments, some operations may be omitted as unnecessary or undesirable. In the same or in different embodiments, other operations not shown may be included in the method to provide additional results.

In certain embodiments, some of the components illustrated herein may be omitted or consolidated. In a general sense, the arrangements depicted in the FIGURES may be more logical in their representations, whereas a physical architecture may include various permutations, combinations, and/or hybrids of these elements.

With the numerous examples provided herein, interaction may be described in terms of two, three, four, or more electrical components. These descriptions are provided for purposes of clarity and example only. Any of the illustrated components, modules, and elements of the FIGURES may be combined in various configurations, all of which fall within the scope of this specification.

In certain cases, it may be easier to describe one or more functionalities by disclosing only selected element. Such elements are selected to illustrate specific information to facilitate the description. The inclusion of an element in the FIGURES is not intended to imply that the element must appear in the disclosure, as claimed, and the exclusion of certain elements from the FIGURES is not intended to imply that the element is to be excluded from the disclosure as claimed. Similarly, any methods or flows illustrated herein are provided by way of illustration only. Inclusion or exclusion of operations in such methods or flows should be understood the same as inclusion or exclusion of other elements as described in this paragraph. Where operations are illustrated in a particular order, the order is a nonlimiting example only. Unless expressly specified, the order of operations may be altered to suit a particular embodiment.

Other changes, substitutions, variations, alterations, and modifications will be apparent to those skilled in the art. All such changes, substitutions, variations, alterations, and modifications fall within the scope of this specification.

To aid the United States Patent and Trademark Office (USPTO) and, any readers of any patent or publication flowing from this specification, the Applicant: (a) does not intend any of the appended claims to invoke paragraph (f) of 35 U.S.C. section 112, or its equivalent, as it exists on the date of the filing hereof unless the words "means for" or "steps for" are specifically used in the particular claims; and (b) does not intend, by any statement in the specification, to limit this disclosure in any way that is not otherwise expressly reflected in the appended claims, as originally presented or as amended.

## Claims

1. A computer-implemented method of updating a malware signature data structure, comprising:

   classifying an object under analysis as malicious, and computing an object signature of the object under analysis; and
   validating the classification, comprising:

   dividing a clean object signatures data structure into a plurality of sub-units;
   assigning the sub-units to dedicated data structures;
   scanning the dedicated data structures, in parallel, with a plurality of scanner instances; and
   upon at least one scanner instance determining, above a threshold, that the object signature for the object under analysis matches the clean objects signatures data structure, rejecting the object signature for inclusion in the malware signature data structures and terminating the scanner instances.

2. The computer-implemented method of claim 1, wherein validating the classification further comprises down sampling the clean object signatures data structure.

**3.** The computer-implemented method of claim 2, wherein down sampling yields a reduced clean object Signature database with at least a 50% reduced size.

**4.** The computer-implemented method of claim 2 or 3, wherein down sampling the clean object signatures data structure comprises excluding signatures for samples last encountered past a time threshold.

**5.** The computer-implemented method of claim 4, wherein the time threshold is six months.

**6.** The computer-implemented method of one of claims 2 to 5, wherein down sampling the clean object signatures data structure comprises excluding signatures for samples that have not produced a hit for a number of validation cycles above a threshold.

**7.** The computer-implemented method of one of claims 2 to 6, wherein down sampling the clean object signatures data structure comprises including only samples that have produced a hit within a past number of N cycles, wherein N is a positive integer.

**8.** The computer-implemented method of one of the preceding claims, further comprising allocating one dedicated scanner instance per dedicated data structure.

**9.** The computer-implemented method of one of the preceding claims, wherein the scanner instances are virtual machines.

**10.** The computer-implemented method of one of the preceding claims, wherein the scanner instances are containers.

**11.** The computer-implemented method of one of the preceding claims, wherein the dedicated data structures comprise hard drive partitions

**12.** The computer-implemented method of one of the preceding claims, wherein the dedicated data structures comprise virtual had drives.

**13.** An apparatus comprising means for performing the method of any of claims 1 - 12.

**14.** The apparatus of claim 13, wherein the means for performing the method comprise a processor circuit and a memory, wherein the memory comprises machine-readable instructions that, when executed, cause the apparatus to perform the method of any of claims 1 - 12.

**15.** At least one computer readable medium comprising instructions that, when executed, implement a method or realize an apparatus as claimed in any of claims 1 - 14.

**CLIENTS 104**

| ENDPOINT 108-1 | ENDPOINT 108-1 | ... | ENDPOINT 108-N |

FILE SIGNATURES DB 115

NEWLY IDENTIFIED OBJECT 110

INTERNET 112

**TEXT**

OBJECT CLASSIFIER 120

MALWARE SIGNATURES 124

CLEAN SIGNATURES 128

*Fig. 1*

Fig. 2

Fig. 3

*Fig. 4*

500

SCANNER 1 504-10 ↔ V1P1 508-1

SCANNER 2 504-10 ↔ V1P2 508-2

SCANNER 3 504-10 ↔ V1P3 508-3

SCANNER 4 504-10 ↔ V2P1 508-4

SCANNER 5 504-10 ↔ V2P2 508-5

SCANNER 6 504-10 ↔ V2P3 508-6

SCANNER 7 504-10 ↔ V3P1 508-7

SCANNER 8 504-10 ↔ V3P2 508-8

SCANNER 9 504-10 ↔ V3P3 508-9

SCANNER 10 504-10 ↔ V3P4 508-10

*Fig. 5*

600

STAGE 1 | BUILD OPTIMIZED SET OF MALWARE FREE SAMPLES 604

STAGE 2

PARTITION/SORT SAMPLES 608

ALLOCATE STORAGE NODES 612

ALLOCATE SCANNERS 616

SCAN NEWLY-DETECTED SIGNATURES AGAINST OPTIMIZED SET 620

STAGE 3 | DISCARD FALSE-PRONE SIGNATURES 624

DONE 690

*Fig. 6*

START

704

RE-PARTITION?

700

YES

NO

712

THRESHOLD VS SCAN TIME PER SIZE/NUM SAMPLES

708

BEGIN

720

716

EXCEED THRESHOLD?

YES

CREATE DISK

NO

724

SAMPLES > PART SIZE?

YES

728

CREATE PARTITION

732

NO

ALLOCATE SAMPLES

792

DONE

*Fig. 7*

Fig. 8

EP 4 390 736 A1

Coverage of drivers against number of samples

*Fig. 9*

Fig. 10

EP 4 390 736 A1

CLIENT DEVICES 1110

1100

MALICIOUS OBJECT 1182

LIGHTING 1132

THERMOSTAT 1134

LOCAL NETWORK 1170

USER 1120

1150

CLIENT APP 1112

SECURITY 1136

SECURITY SERVICES PROVIDER 1190

PROTECTED ENTERPRISE 1102

GATEWAY 1108

OTHER DEVICES 1140

1104

ATTACKER 1180

EXTERNAL NETWORK 1172

Fig. 11

Fig. 12

1200

MEMORY 1204-1
- OPERATING SYSTEM 1206
- OPERATIONAL AGENTS 1208
- DATA 1212

MEMORY 1204

PROC0 1202-1

PROC1 1202-2

1212

CHIPSET 1216

GRAPHICS 1222

1228

AUDIO I/O 1242

STORAGE 1250

I/O DEVICES 1235

BUS BRIDGE 1232

ACCELERATORS 1246

COMMUNICATION DEVICES 1240

KB/MOUSE 1238

**SoC 1300**

**CORE0**
**1302-1**

**CORE 1**
**1302-2**

**L2 CACHE CONTROLLER 1304**

**BUS INTERFACE UNIT**
**1314**

**L2 CACHE**
**1316**

**GPU**

**1306**

**VIDEO CODEC**

**1308**

**LCD VIDEO I/F**

**1310**

**MIPI**

**HDMI**

**INTERCONNECT 1312**

**SIM I/F**
**1318**

**BOOT ROM**
**1320**

**SDRAM CONT 1322**

**FLASH CONT**
**1324**

**SPI DIRECTOR**
**1328**

**POWER CONTROLLER**
**1330**

**DRAM**
**1332**

**FLASH**
**1334**

*Fig. 13*

**VIRTUALIZED NETWORK INFRASTRUCTURE 1400**

NFV
ORCHESTRATOR
1401

**HARDWARE PLATFORM 1402-1**

VM 1404-1

VNF 1
1412-1

VIRTUAL OS
1408-1

DPDK 1416-1

VM 1404-2

VNF 2
1412-2

VIRTUAL OS
1408-2

DPDK 1416-2

**HARDWARE PLATFORM 1402-2**

VM 1404-3

VNF 3
1412-3

VIRTUAL OS
1408-3

DPDK 1416-3

VM 1404-4

VNF 4
1412-4

VIRTUAL OS
1408-4

DPDK 1416-4

DISTRIBUTED vSWITCH 1422

HYPERVISOR 1420-1

HYPERVISOR 1420-2

*Fig. 14*

CONTAINERIZATION
INFRASTRUCTURE
1500

**CONTAINERIZED SERVER 1504**

USERSPACE
APPLICATIONS
1520

SERVICES
1518

CONTAINERIZATION
LAYER
1516

MAIN
OPERATING
SYSTEM
1512

**CONTAINER 1530**

USERSPACE
APPLICATIONS
1536

SERVICES
1534

MINIMAL OS
1532

**CONTAINER 1540**

USERSPACE
APPLICATIONS
1546

SERVICES
1544

MINIMAL OS
1542

SHARED KERNEL 1508

*Fig. 15*

Fig. 16

EP 4 390 736 A1

EP 4 390 736 A1

Fig. 17

42

1800

START

EXTRACT ACTIVATION VALUES FROM INPUT DATA — 1804

PROPAGATE ACTIVATION VALUES TO NEXT LAYER — 1808

FOR EACH NEURON IN THIS LAYER, COMPUTE SUM OF WEIGHTED AND BIASED ACTIVATION VALUES — 1812

FOR EACH NEURON IN THIS LEVEL, NORMALIZE $(0 \leq a \leq 1)$ — 1816

NO

LAST LAYER? — 1820

YES

CLASSIFY PERCEPTRON(S) — 1824

*Fig. 18*

ANALYZER ENGINE 1904

OPERATING SYSTEM 1908

GPU ARRAY 1924

PYTHON INTERPRETER 1912

NEURAL NETWORK 1928

NETWORK INTERFACE 1920

RESULTS INTERPRETER 1932

OBJECTS DATABASE 1936

*Fig. 19*

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2011/126286 A1 (NAZAROV DENIS A [RU]) 26 May 2011 (2011-05-26) * paragraph [0013] - paragraph [0021] * * paragraph [0037] - paragraph [0060] * ----- | 1-15 | INV. G06F21/56 ADD. H04L9/40 |
| A | KR 2018 0075881 A (KOREA INTERNET & SECURITY AGENCY [KR]) 5 July 2018 (2018-07-05) * paragraph [0017] - paragraph [0018] * * paragraph [0103] - paragraph [0106] * ----- | 1-15 | |
| Y | US 2013/297656 A1 (WANG QIANG [US]) 7 November 2013 (2013-11-07) * abstract * * paragraph [0002] - paragraph [0004] * * figures 1A,2H,2I,4A,4B * * paragraph [0043] * * paragraph [0095] - paragraph [0166] * ----- | 1-15 | |

TECHNICAL FIELDS SEARCHED (IPC)

G06F
H04L

The present search report has been drawn up for all claims

| Place of search | Date of completion of the search | Examiner |
|---|---|---|
| The Hague | 8 May 2024 | Lamelas Polo, Yvan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 8063

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2024

| Patent document cited in search report | | Publication date | Patent family member(s) | | Publication date |
|---|---|---|---|---|---|
| US 2011126286 | A1 | 26-05-2011 | US 2011126286 | A1 | 26-05-2011 |
| | | | US 2013133069 | A1 | 23-05-2013 |
| KR 20180075881 | A | 05-07-2018 | NONE | | |
| US 2013297656 | A1 | 07-11-2013 | US RE49090 | E | 31-05-2022 |
| | | | US 2009100055 | A1 | 16-04-2009 |
| | | | US 2011066637 | A1 | 17-03-2011 |
| | | | US 2013297656 | A1 | 07-11-2013 |
| | | | US 2017032171 | A1 | 02-02-2017 |
| | | | US 2020320270 | A1 | 08-10-2020 |
| | | | US 2021049339 | A1 | 18-02-2021 |
| | | | US 2021303819 | A1 | 30-09-2021 |
| | | | US 2023134293 | A1 | 04-05-2023 |

EPO FORM P0459

For more details about this annex : see Official Journal of the European Patent Office, No. 12/82